# EUROPEAN PATENT SPECIFICATION

(11) **EP 4 012 975 B1**
(45) Date of publication and mention of the grant of the patent: **14.08.2024**
(21) Application number: 20213879.8
(22) Date of filing: 14.12.2020
(51) Int. Cl.: H04L 12/18, H04W 88/06

(54) **METHOD AND SYSTEM FOR USAGE-OPTIMIZATION IN A COMMUNICATION NETWORK**
VERFAHREN UND SYSTEM ZUR NUTZUNGSOPTIMIERUNG IN EINEM KOMMUNIKATIONSNETZWERK
PROCÉDÉ ET SYSTÈME PERMETTANT D'OPTIMISER L'UTILISATION DANS UN RÉSEAU DE COMMUNICATION

(43) Date of publication of application: 15.06.2022
(73) Proprietor: Deutsche Telekom AG, 53113 Bonn (DE)
(72) Inventor: FRISCH, Andreas, 53757 Sankt Augustin (DE); BAUMGARTEN, Benjamin, 53639 Königswinter (DE)
(74) Representative: Vossius & Partner Patentanwälte Rechtsanwälte mbB

(56) References cited:
- EP-A1- 2 164 225
- GB-A- 2 430 111
- NATARAJAN SRIDHARAN ET AL: "Demand Aware Edge Caching Architecture for evolved Multimedia Broadcast Multicast Service to Reduce Latency and bandwidth Savings", 2018 IEEE INTERNATIONAL CONFERENCE ON ELECTRONICS, COMPUTING AND COMMUNICATION TECHNOLOGIES (CONECCT), IEEE, 16 March 2018 (2018-03-16), pages 1 - 6, XP033415560, DOI: 10.1109/CONECCT.2018.8482387

## Description

The invention relates to a method and system for usage optimization in a communication network.

GB 2 430 11 1 A relates to a heterogeneous network environment comprising a first data communication network that is substantially uni-directional and a second network that is bi-directional; and a method of confirming that a multi-mode mobile terminal can receive datagrams on a downlink of said first network.

EP 2 1 64 225 A1 relates to a method for data processing wherein data are distributed to several devices via at least two transport techniques; and wherein the transport technique is selected dependent on a number of devices requesting or using said data.

NATARAJAN SRIDHARAN ET AL: "Demand Aware Edge Caching Architecture for evolved Multimedia Broadcast Multicast Service to Reduce Latency and bandwidth Savings", XP033415560 relates to content caching in the LTE core network nodes like GW or in the access network nodes like eNodeB or a separate caching servers in the access or core networks and implementing efficient content distribution methods such as evolved multimedia broadcast and multicast service (eMBMS).

Use of multicast- and broadcast-mechanism is well known and already represents an implemented technology in telecommunications. Instead having a dedicated channel for each user demanding a requested content, a common transmission to serve a plurality of users is performed according to a multicast- and/or broadcast-mechanism, which saves resources compared to a multitude of unicast transmission.

This is a major improvement, in particular when resources for transmission are very limited, a high efficiency gain can be achieved by bundling several content demands in one multicast or broadcast transmission.

However, this already indicates the prerequisite for realizing such a gain: A number of users in a certain area, i.e. the area serviced by a corresponding transmission network, need to request the same content at the same point of time. Only under this particular condition, a multicast and/or broadcast can provide its advantages by a joint data transmission. As soon the request for content is only a little bit distorted in time or by other framework conditions, like different content source or transmission path, the request is treated as singular request and unicast is applied.

In result multicast and/or broadcast-transmission is typically used either as a general supply of a datastream with the users, leaving just with the decision "take it or leave it", or in case of individual requests from users, by a very limited chance to bundle requests in a multicast and/or broadcast transmission, when all the requests of the users coincidentally perfectly overlap.

Vice versa, the chances to benefit from multicast and/or broadcast increase, the better it becomes possible to gather and align demand for specific content.

It is therefore an objective of the present invention to provide an improved method and system for usage optimization in a communication network. This objective is achieved by the subject-matter of the independent claims, the dependent claims relate to further aspects of the invention.

The terms broadcast and multicast both describe a one-to-many transmission. Wherein, in a broadcast a transmission is send to a plurality of recipients without addressing each recipient individually. In contrast in a multicast each recipient is addressed individually. Despite the obvious technical differences, with regard to the aspects of the present invention, the same principles apply, and the invention is applied to multicast and broadcast in embodiments of the invention.

The combination of both, i.e. the "or" case, relates to further embodiments of the invention. The combination refers to cases where either both transmission schemes are used simultaneously or subsequently in a network. For example, a data may be transmitted with broadcast in a transport network to an access network and via multicast from the access network to individual terminal devices or vice versa. Therefore, in this description the term "broadcast and/or multicast" is used to refer to the general concept of a one-to-many transmission as well as to each transmission type individually or, where applicable, to the combination thereof. A more detailed definition is presented below.

In an aspect of the invention a method is provided for usage optimization in a communication network according to claim 1.

In an embodiment of the invention, the identifying step comprises identifying similar content requests within a predetermined time limit; and/or wherein the bundling step comprises waiting until a predetermined number n of similar content requests has been identified or the predetermined time limit has lapsed; and wherein the content is delivered in a multicast and/or broadcast transmission via the common access option.

In an embodiment of the invention, for each content request a unicast transmission is maintained until similar requests are identified, and the unicast transmission is switched to the multicast and/or broadcast transmission.

In an embodiment of the invention, the optimizing step comprises recommending or commanding a change of the access option and or the access network unit to one or more of the content requesting units.

In an embodiment of the invention, the method further comprises forecasting a content request for at least one content requesting unit and/or access network unit; and wherein the method further comprises storing the content corresponding to the forecasting result in at least one network component close to the at least one content requesting unit; and preferably comprises performing a corresponding transmission of the content to be stored as a multicast and/or broadcast transmission.

In an embodiment of the invention, the access network unit is one or more of: a telecommunication network base station, a router, a switch, a cache, a DVB, DAB, ATSC, ISDB, DTMB, MBMS, eMBMS, feMBMS sending unit, a cable TV sending unit.

In an embodiment of the invention, the access option is one or more of: a network slice, a transmission frequency, a wired network connection, a wireless network connection, a telecommunication protocol.

In an aspect of the invention an apparatus is provided for usage optimization in a communication network according to claim 9.

In an embodiment of the invention, the apparatus is further configured to
a) forecast a content request for at least one content requesting unit and/or access network unit; and
b) store the content corresponding to the forecasting result in at least one network component close to the at least one content requesting unit; and
c) preferably to perform a corresponding transmission of the content to be stored as a multicast and/or broadcast transmission.

In an embodiment of the invention, the access network unit is one or more of: a telecommunication network base station, a router, a switch, a cache, a DVB, DAB, ATSC, ISDB, DTMB, MBMS, eMBMS, feMBMS sending unit, a cable TV sending unit.

In an embodiment of the invention, wherein the access option is one or more of: a network slice, a transmission frequency, a wired network connection, a wireless network connection, a telecommunication protocol.

It is a general aspect of the invention, to bundle similar request for data. In case of a pure push-service, usually the service is designed to provide the information without considering a specific request of a user at moment of transmission. Eventually the information is provided via a loop, which repeats the transmission in a certain sequence to make the data available to a user as soon the user is willing to receive the information, while accepting a period until the begin of the new transmission in the loop.

It is further general aspect of the invention, to align different content requests in time. In case of a pull-service the situation is more challenging. Since the request from the user perspective is individual and - most likely - not coordinated with any other user, the corresponding system for delivering the content to each user is confronted with a number of single content requests.

In an embodiment of the invention, this can be accepted and supported by a unicast transmission for each demand as baseline solution, until a multitude of same requests are received, which trigger the switch to a multicast and/or broadcast.

The invention relates to solutions for achieving a higher likelihood for having similar content requests and in result extending the opportunities in efficiency gains by use of multicast and/or broadcast mechanisms. This is achieved by a number of coordinated and meshed procedures, which optimize the likelihood for use of multicast and/or broadcast.

It is a general aspect of the invention that the method and system include:
A) Generating an overarching perspective on several access options, to which a user's terminal device can be connected to, for the reception of content technologies;
B) an analysis for an optimal data transmission, considering all available content requests in a certain service area and time and the available access networks for respective devices;
C) an optimization mechanism to align different content requests in time; and
D) an optimization mechanism with respect to expected content demands based on forecasting methods, in order to prepare specific data and/or to forward those data in a defined centralized storage.

### Brief description of the drawings

The above-described objects, advantages and features of the present invention, as well as others, will be more readily understood from the following detailed description of certain preferred embodiments of the invention, when considered in conjunction with the accompanying drawings in which:
- Fig. 1: shows a system according to an embodiment of the invention in a network environment;
- Fig. 2: shows a schematic network structure of a network environment according to an embodiment of the invention;
- Fig. 3a): shows multiple user incoming requests according to an embodiment of the invention;
- Fig. 3b): shows an overarching access management according to an embodiment of the invention;
- Fig. 4: shows a request collection according to an embodiment of the invention;
- Fig. 5: shows the content delivery according to an embodiment of the invention;
- Fig. 6: shows the content delivery in an access network according to an embodiment of the invention;
- Fig. 7a): shows several user requests for identical content but distorted over time;
- Fig. 7b): shows the collecting of incoming requests according to an embodiment of the invention;
- Fig. 8a): shows several user requests for identical content but distorted over time, which are treated separately;
- Fig. 8b): shows active bundling of several incoming requests on the next outgoing playout-sequence including an optimized multicast and/or/broadcast-distribution;
- Fig. 9a): shows the number of streams and the number of views as a function of time in a burst-type streaming event and with unicast transmission;
- Fig. 9b): shows the number of streams and the number of views as a function of time in a burst-type streaming event and with optimized multicast and/or broadcast transmission;
- Fig. 10a): shows the content distribution without additional information and logic the system waiting for any user request for content;
- Fig. 10b): shows the preloading according to an embodiment of the invention;
- Fig. 11: shows content prediction according to an embodiment of the invention;
- Fig. 12: shows a distribution of preselected content according to an embodiment of the invention;
- Fig. 13: shows forwarding of the predicted content according to an embodiment of the invention;
- Fig. 14: shows the preparation of specific data forwarding according to an embodiment of the invention;
- Fig. 15: shows multiple streams according to an embodiment of the invention;
- Fig. 16: shows the transmission of a content without any optimization;
- Fig. 17: shows the transmission of content with optimization according to an embodiment of the invention; and
- Fig. 18: shows the transmission of content with optimization according to an embodiment of the invention.

### Detailed description of the drawings

In the following, embodiments of the invention will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

Hereinafter the term unicast describes any kind of one-to-one type transmission, i.e. from one point of a communication network, i.e. a sender, to another point of the communication network, i.e. a receiver. Unless indicated otherwise the term is neutral with regard to the transmission technology. Furthermore, the term is neutral with regard to the actual nature of the sender and the receiver. In other words, the receiver is not necessarily a user terminal device. Still further, the transmission may not be a direct transmission but also may have any number of relay points. Many unicast protocols for different types of wireless and wired communication networks are known, such as UDP, TCP, SCTP.

Hereinafter the terms broadcast as well as multicast describe any kind of one-to-many transmission, i.e. from one point of a communication network, i.e. a sender, to a plurality of points of a network, i.e. a plurality of receivers. The difference is found in the dedicated addressing of the receivers, with multicast addressing a specific selection from the plurality of receivers, while broadcasting addressing all potential receivers without a specific selection. Furthermore, these terms are neutral with regard to the actual nature of the sender and the receivers. In other words, the receivers are not necessarily user terminal devices. Still further, the transmission may not be a direct transmission but also may have any number of relay points. Many broadcast protocols for different types of wireless and wired communication networks are known, such as broadcast/multicast protocols based on DVB, DA, ATSC, ISDB, DTMB, MBMS, eMBMS, feMBMS.

Hereinafter the term "same content" is used for any kind of content delivered in a unicast and/or broadcast and/or multicast transmission in any kind of wireless and wired network. As an example, the term includes data, in a data-transmission network, a TV -Signal in a cable or over-the-air network. The term in particular also is used to describe content transporting the same information via different transmission networks. The term must be interpreted in a reasonably broad manner to essentially also include the same content transporting essentially the same or equivalent information, and not only bit by bit exactly the same information.

For example, a transmission of a soccer match via a digital TV broadcast may be technically different with regard to the transmitted bytes but is still considered the same content as in an internet stream of the same match.

Hereinafter, the term area is to be understood as a specific geographic area or a section of the network. That is, it is either referring to the location serviced by the same access network and/or parts of the transport network, or it is referring to a specific section of the access network and/or parts of the transport network itself.

Hereinafter the described network structures are kept as simple as possible to improve intelligibility, however, each singular term of a network may also include the plural of said term, unless indicated otherwise or being obvious by context.

In state of the art networks, in case a plurality of content requests will be started for the same content in a narrow timeframe but either due to different timing of the respective users or by technical limitations of the transport mechanism, those requests will arrive at different points in time at the content hosting instance. In current systems this will result in a plurality of individual unicast transmissions to all requesting users, without having the chance to start a more efficient distribution via broadcast and/or multicast.

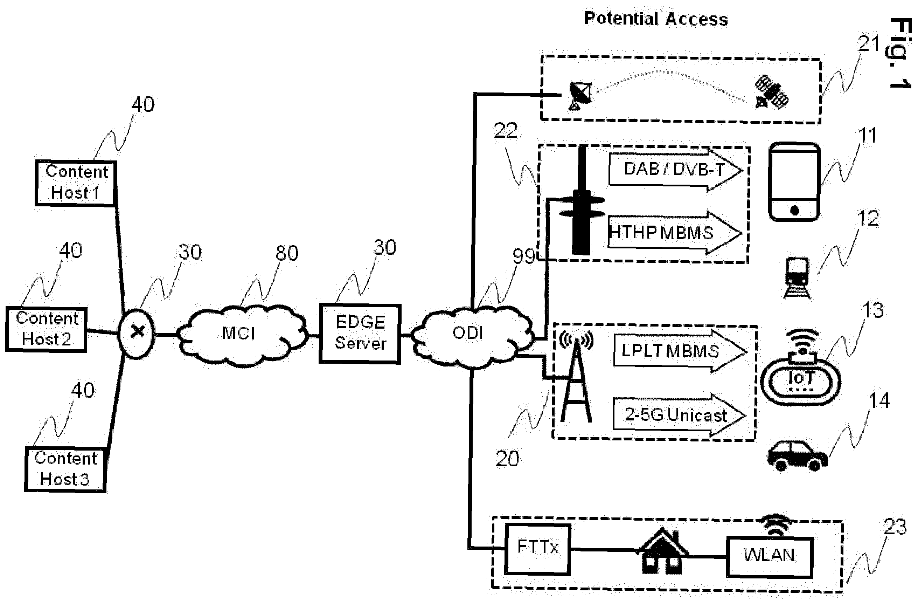

Figure 1 shows a system according to an embodiment of the invention in a network environment. The network environment comprises a plurality of content hosts 40, also referred to as hosting instances. The network further comprises a backhaul and transport network 30. The transport and backhaul network is indicated by a single node ⊗ in the figure, however, as stated above, this only symbolizes one or more network nodes comprised in said transport and backhaul network. An edge server is a preferred embodiment of a node of the backhaul network 30. The network further comprises different access networks 20, 21, 22, 23.

In detail, a satellite link 21 is one embodiment of an access network. A TV broadcast 22, preferably based on a DAB/DVB-T; High Tower High Power, HTHP MBMS; or Further evolved Multimedia Broadcast Multicast Service, FeMBMS, transmission is a further embodiment of an access network. A 5G unicast 20 is a still further embodiment of an access network. A Low Power Low Tower, LPLT, MBMS of a 5G network is still a further embodiment of an access network. Further broadcast techniques such as ATSC, ISDB, DTMB are also possible access networks. A connection 23 based wireless network protocols, preferably based on the IEEE 802.11 family of standards, also referred to as Wifi, is still a further embodiment of an access network.

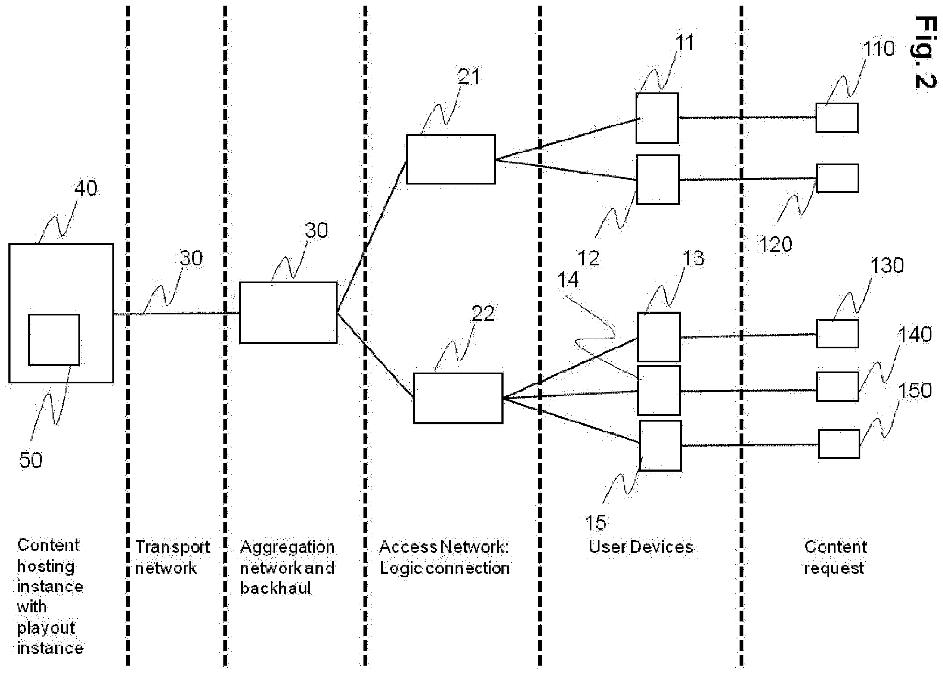

The network of Fig. 1 further comprises a plurality of user equipment, UE, devices 11, 12, 13, 14; see Fig. 2. Each UE may be connected to one or more of the access networks 20, 21, 22, 23 via one or more suitable data connections. In other words, each UE has a plurality of options to receive data from the network via different access networks.

The system according to the invention is preferably formed in the backhaul and transport network 30. The system comprises an Optimal Distribution Intelligence, ODI, 99 and preferably comprises a Most likely requested Content Intelligence, MCI, 80. The ODI is configured to analyze the requests and to control the delivery of content. The MCI is configured to analyze the requests and to forecast a based on the result and to optimize the delivery based on the forecast. Both the ODI and the MCI are shows as discrete units. However, as will be detailed below, in a preferred embodiment of the invention the ODI and/or the MCI are implemented as a network function, more preferably as a distributed network function.

Fig. 2 shows a schematic network structure of a network environment according to an embodiment of the invention. The network environment of Fig. 2 essentially corresponds to the network of Fig. 1. However, for better intelligibility of the data distribution processes, the number of access networks is reduced to two, 21 and 22, and the number of terminal devices, also referred to as UE, is increased to five UEs 11, 12, 13, 14, 15. Furthermore, the content hosting unit 40 is shown in more detail and comprises a content delivery unit 50. As discussed above the transport network 30 and the aggregation and backhaul network 30 may comprise a plurality of nodes. Vertical dashed lines indicate different network levels. The indication is only to improve intelligibility.

Given a number of content requests will be started for the same content in a narrow timeframe but either due to different timing of the user or by technical limitations of the transport mechanism those requests will arrive at different points in time in the content hosting instance. In current systems this will result in a unicast-transmission to all requesting users without having the chance to start a more efficient distribution via Broadcast.

According to an embodiment of the invention, incoming requests from different user requests are collected, before starting the playout and defining a distribution method. This allows making use of the option for a multicast and/or broadcasting distribution. Therefore, one or more of the procedures described below are applied.

Referring again to Fig. 2, the users are starting their respective content request 110, 120,130,140, and 150 on their respective terminal device 11, 12, 13, 14, and 15. The terminal devices are connected via a respective one of different access networks 21 and/or 22 to a backhaul and transport network 30. According to the invention, each respective content request contains information about the requested content itself, further contains information about the respective terminal device itself, and still further contains information about the respective connecting access network 21 and/or 22. The content request is forwarded via the access network 21 or 22, to the backhaul and transport network 30 and further to the content hosting instance 40.

It is a core concept of the invention, to collect a critical mass for an efficient multicast and/or broadcast distribution. Therefore, it is required to identify as many of identical user requests as possible and to bundle those to a common transmission as long those users continue with their identical demand. To achieve this, all available access options for a specific user device based on a number of available access networks, which is used for the request of content, are analyzed based on an overarching perspective of the content requests in a specific area.

### I. Overarching Access Management

According to an embodiment of the invention, preferably in the ODI, an overarching perspective on several access options, to which a user's terminal device for the reception of content technologies can be connected to, is obtained from the additional information contained in the content request. Subsequently an analysis for an optimal data transmission, considering all available content requests in a certain area and time and the available access networks for respective devices, is performed.

According to an embodiment of the invention, a critical mass for an efficient multicast and/or broadcast distribution obtained by identifying identical user requests and to summarize those to a common transmission as long those users continue with their identical demand.

Given a number of users with devices attached over different access networks start a content request for the same content at the same point of time. Due to the different access networks these requests are treated separately and for each of the user network capacity of the specific access network will be allocated.

However, each of the UE knows about the access options available for the respective device itself and is able to choose from the options based on an inherent terminal logic or by a user command. According to the invention, the information of available access options, which preferably fulfill a certain predefined quality standard, is forwarded with the request from the terminal device to the optimal distribution intelligence in the network. Preferably the information is gathered and forwarded by a corresponding application and/or client function on the UE.

According to the invention, the information regarding the access options is available to the network. In an embodiment of the invention, a specific network function analyzes those requests. In a preferred embodiment of the invention, the analyzing is performed in the ODI, preferably located in the transport network.

Given, a number of devices are connected via several access options but requesting the same content at the same point of time. In case the ODI finds that all of said devices have at least one common option for receiving the content via the same access network, which in addition can work in a multicast and/or broadcast mode, the system according to the invention is configured to either recommend or, preferably, command a switch towards the one common access option and provide a multicast and/or broadcast option for the transmission.

This transmission over a plurality of attached devices is more efficient and preferably even allows for a higher Quality of Service for users due the more efficient use of available capacity.

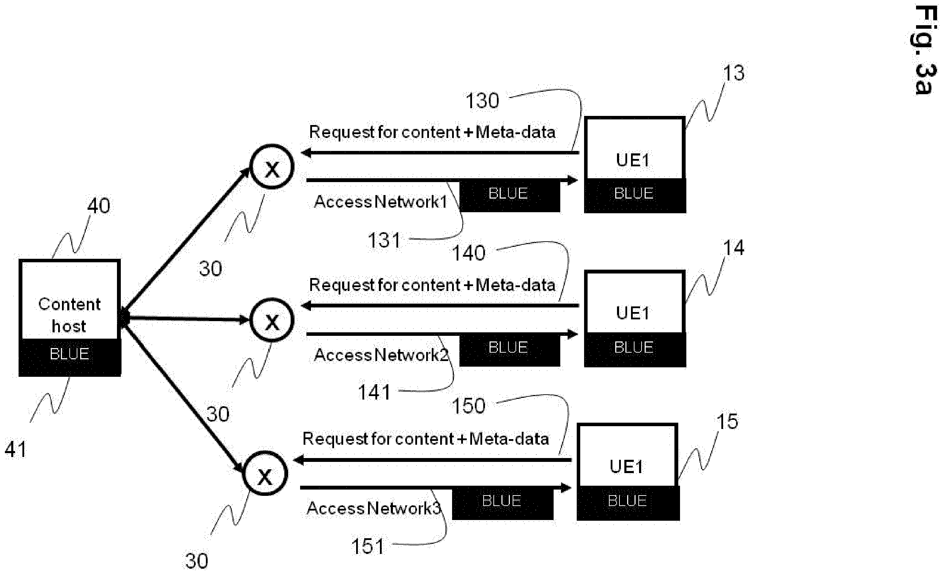

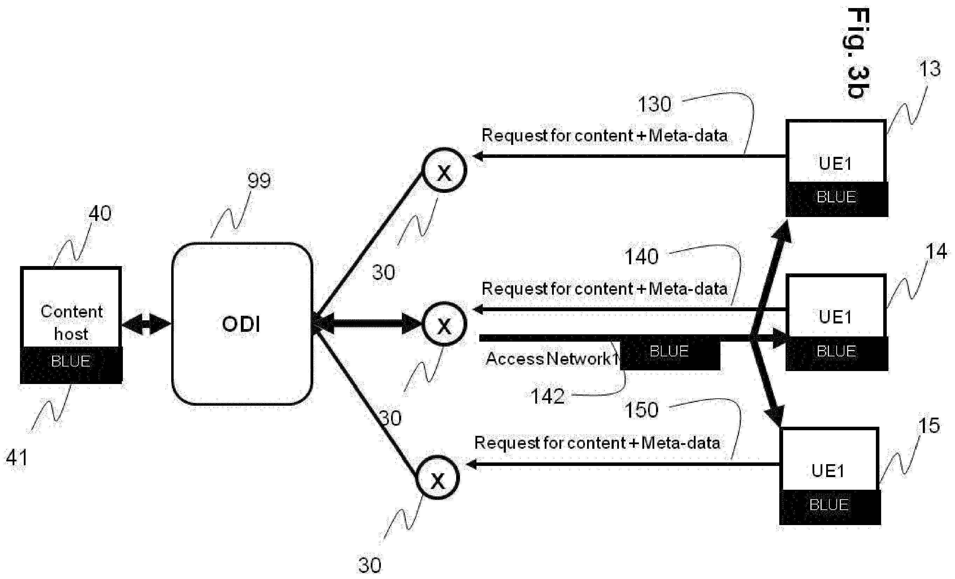

Figure 3a) shows multiple user incoming requests according to an embodiment of the invention and Fig. 3b) shows an overarching access management according to an embodiment of the invention. In Fig. 3a) several UE 13, 14 and 15 request the same content 41, indicated by the term "blue" in the drawing, in individual requests 130, 140, and 150. The request comprises the request for content and meta-data. The meta data comprises the information about the UE, preferably comprises the access options available to the UE. The requests are forward through the transport network 30 to the content host 40. It is noted that in the Figures the symbol ⊗ indicates a network node of any kind, i.e. a network node of the transport and/or access network. In particular the symbol ⊗ also indicates a plurality of network nodes.

In state of the art systems the request are treated separately although they are identical in time and content. Therefore, as shown in Fig. 3a) the content 41 is delivered in individual unicast transmissions 131, 141, and 151.

In an embodiment of the invention, as shown in Fig 3b), the content request and metadata, i.e. the information about the UE and/or the access options of the UE, are forwarded in the transport network 30 and analyzed in the ODI 99. The analysis is performed based on the additional meta data provided by the devices. According to the invention, the meta data comprises information about access options among other framework data. The ODI is configured to identify identical requests as those as shown in Fig. 3b or even if they are incoming via different access networks, not shown in Fig. 3b, accordingly a multicast and/or/broadcast can be applied. The ODI 99 communicates with the content host 40 and facilitates a single multicast and/or broadcast transmission 142 to all requesting UE 13,14,15.

With combining user requests via different access network options in the ODI, one step is done to identify similar user requests and to summarize those in one multicast and/or broadcast stream. Nevertheless, in this embodiment of the invention, it is still necessary that all content requests are in an identical timeframe.

This may be the case in transmitted live events or other singular events which are able to raise high customer interests. However, there may be information in form of stored data, which can be demanded at every point of time. On the other hand, some content may be requested by individual users at a specific point in time, because it is either very useful or even necessary to get the information in a specific window of time. Due to the individual demand of the users a slight distortion of user requests emerges, which results in individual treatment and according unicast-transmission.

### II. Collecting incoming requests

According to an embodiment of the invention, incoming requests from different user requests are collected before starting the playout and defining the distribution method.

In the above embodiments the ODI has been described in terms of a discrete unit in a transport network. However, this is only a specific embodiment. In general, the Optimal Distribution Intelligence refers to a function of the network, which preferably is distributed over the network, and located somewhere between the content hosting and the access network. The ODI is configured to communicate with the network to analyze and control the broadcast and/or multicast requirements as described above. Furthermore, the ODI is configured to communicate with the content hosting instance, preferably with the play-out components thereof. In an embodiment of the invention the ODI is configured to control the network to use a single broadcast and/or multicast transmission to deliver the same content to a plurality of user devices in order to serve a plurality of requests for the same content from the plurality of user devices; instead of serving the requests by a plurality of unicast transmissions.

Therefore, in preferred embodiments the ODI is not a physical element in the access, aggregation, or transport network, but a function implemented on one or more network elements of said networks.

The ODI is configured to analyze the connections as well as the content of requests transported in the network. To this end, the ODI preferably comprises a package inspection logic. Based on the analysis performed by the ODI, according to the invention, further processing of the requests is controlled. Specifically, the ODI or at least the package logic part of it may formed at the content host.

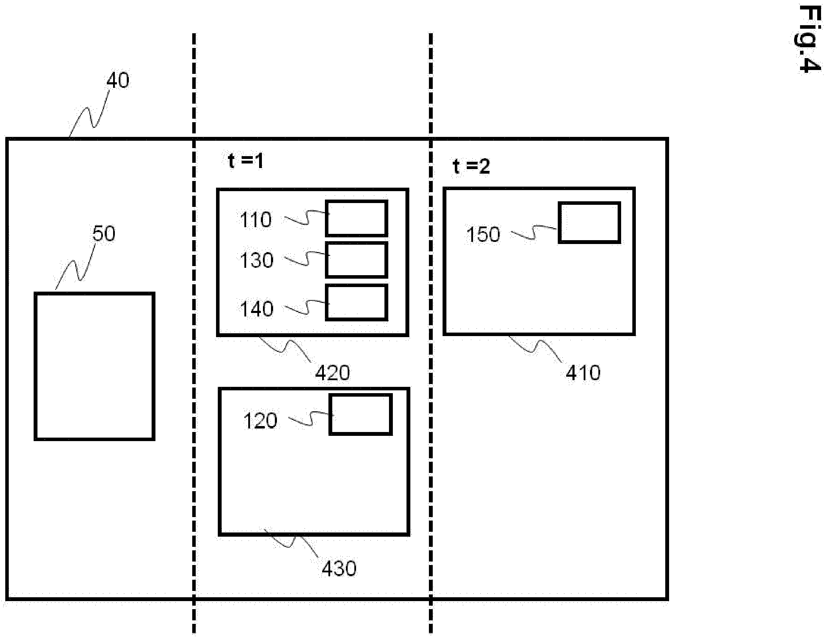

Fig. 4 shows a request collection according to an embodiment of the invention. In an embodiment of the invention, the content host 40 has a specific logic and caches 410, 420, and 430, which are configured to collect incoming content requests. That is, in a preferred embodiment, at least part of the ODI is implemented at the content host. For each requested content a new cache is defined, resulting in gathering same content request 110, 130, 140 in one cache 410, while a request for different content 120 results in defining a new cache 430.

Preferably, within each cache a time range is defined. The time range will define the duration in which incoming content requests are collected before further processing for transmission of the requested content is started. The time range is preferably a predefined fix time range and started as soon the first content request in a specific cache arrives. Additionally or alternatively, the time range may be dynamically adapted based on type of content and/or network conditions.

Once the time range is closed an incoming content request even for the same content 150 will open a new cache 410. In Fig. 4 vertical dashed lines indicate the different time ranges t=1 and t=2.

In an embodiment of the invention, the time range is defined by the content hosting instance 40 based on which duration is acceptable with regard to Quality of Service and efficiency aspects, before the delivery of content to the requesting user is started.

In an embodiment of the invention, the cache and the logic behind is furthermore configured to analyze the content request. Since a cache already contains requests for the same content and is configured to bundle content requests in the predefined time range, the requests in the cache may differ only in the location of the originating request. The information for the location of the incoming request is available based on the meta data information dataset in the request.

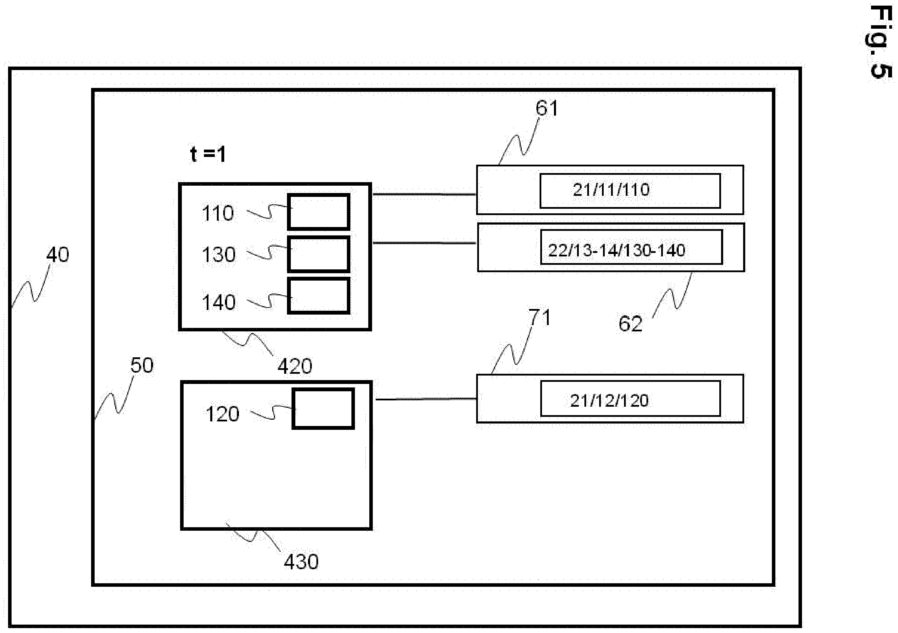

Fig. 5 shows the content delivery according to an embodiment of the invention. Fig.5 shows the delivery corresponding to the collected requests of Fig. 4. Once the duration of the time range has ended, i.e. the predefined time t=1 has lapsed, the content requests are processed and the content delivery is started by the content delivery instance 50. Based on the analysis in the cache the involved access networks get a separated stream of the related content 61, 62, 71 with the information of the requesting devices. This could be only one single device per connecting access network but also a plurality of devices per access network. In detail, access network 21 is instructed to serve the content 420 to device 11 based on content request 110 in stream 61; access network 22 is instructed to serve the content 420 to devices 13 and 14 based on content requests 130 and 140 in stream 62; and access network 21 is instructed to serve the content 430 to device 12 based on content request 120 in stream 71.

As detailed above the term access networks refers to different networks, to which terminal devices may be connected. At least one access network is required to be able to request and/or receive content. In case more than one access network is available, each available network path is referred to as access option. In a example a smart phone, given suitable network availability, may be connected via LTE or WLAN. It is possible that one physical network connection provides a plurality of access options, e.g. via different standards or protocols.

As defined above, a terminal device may be connected via different access networks. In this case more than one access network is used, this case may be referred to as an access option. In an example, a smart phone may be connected via LTE and WLAN. That is the LTW network and the WLAN network are both access networks and LTE and WLAN are the access options of the smart phone.

Again, referring to Fig, 5, the cache 410 has collected requests 110, 130, and 140. Request 110 of UE 11 was sent via access network 21 and the requests 130 and 140 were send via access network 22 from UE 13 and 14, respectively, see also Fig. 2.

Accordingly, the stream 61 is sent out via access network 21 to UE 11 and stream 62 is sent out via access network 22 to UE 13 and 14. Although received at the same time, i.e. within the same period, request 120 ended up in a different cache, because it was requesting a different content. Therefore, the stream 71 with the different content is treated separately. Since only one UE was requesting within the period of time, a unicast transmission is used.

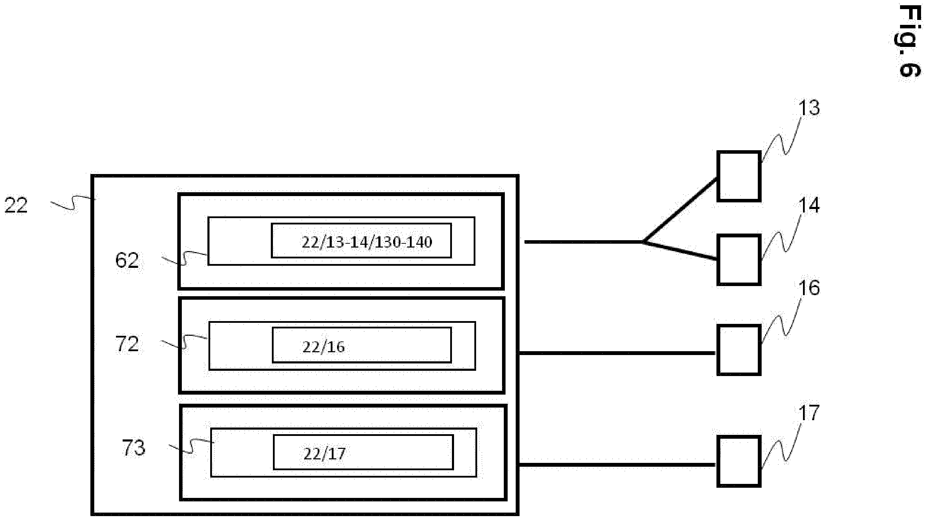

Fig.6 shows the content delivery in an access network according to an embodiment of the invention. The receiving cell 22 contains a logic to decide if a broadcast transmission makes sense. That is, access network 22, preferably contains a trigger to start a broadcast transmission if at least n connected devices shall be provided with the same content terminal devices request, wherein n is a predetermined number greater than one. Additionally or alternatively, the n may be dynamically adapted based on the type of content and/or the network conditions.

In an embodiment of the invention, the arriving incoming data stream from the content hosting 40 already contains the information if one or more UE have requested content.

If the benchmark of n, e.g. n=2, is met or passed the access network 22 starts a broadcast transmission to the requesting devices 13, 14. If the benchmark is not met, e.g. for single devices 16, 17 or because of different content 72, 73, the stream is handled via unicast.

Given the situation of a multitude of incoming user requests for the same content but in slightly different point of time an instance, preferably the ODI, in the network can align the user requests in time and create the conditions to switch from a multitude of unicast transmission to a multi-/broadcast-transmission in the respective area.

In an embodiment of the invention, a maximum of time is defined, which is the time a user is supposed to wait for the requested content based on its individual content request. With the first incoming user request this time is used to wait for one or more potential incoming requests for identical content in the same area. At the end of the defined timeframe the ODI is configured to decide on unicast or multicast and/or broadcast transmission, depending on the number of identical user request after alignment in time based on the existing criteria.

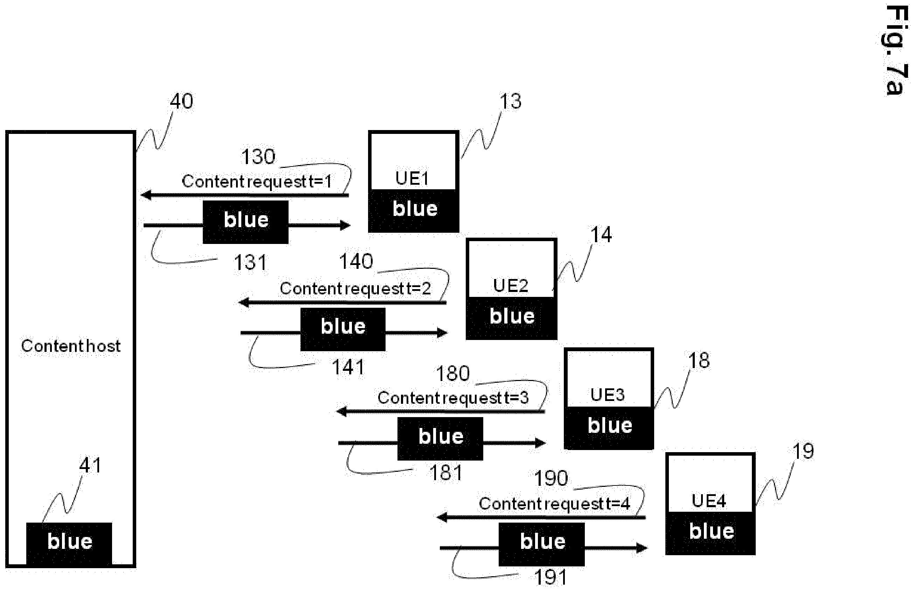

Figure 7a) shows several user requests 130,140,180, 190 for identical content but distorted over time. In detail it is shown that UE 13 requests content 41 at time t=1; UE 14 requests content 41 at t=2; UE 18 requests content 41 at t=3; and UE 19 requests content 41 at t=4. In a state of the art network the request 130, 140, 180, and 190 are treated separately, i.e. for each request a corresponding unicast transmission 131, 141, 181, and 191 is initiated. This is shown in Fig. 7a)

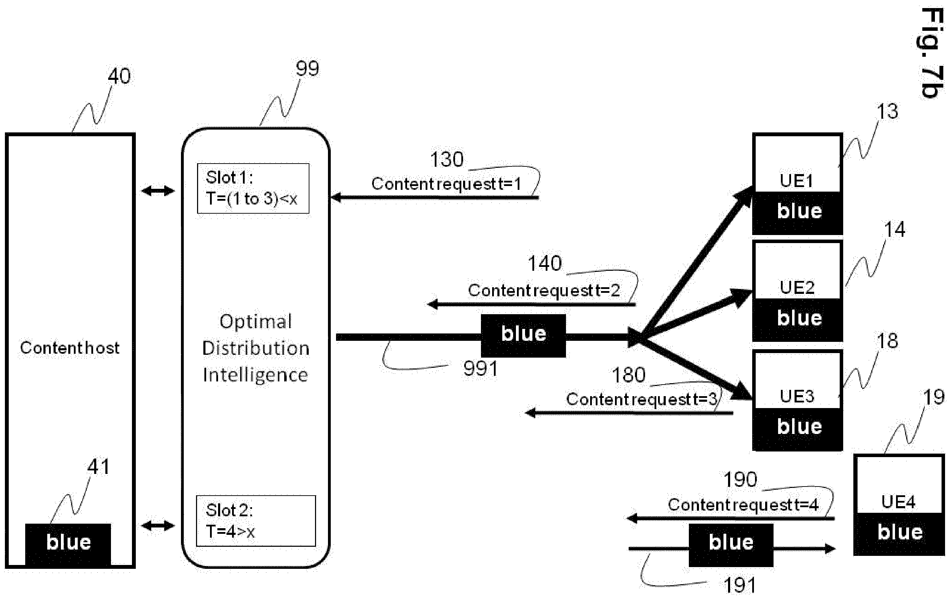

Figure 7b) shows the collecting of incoming requests according to an embodiment of the invention. The ODI 99 is configured to collect and analyze the incoming user requests. If within a predefined timeframe x, e.g. 1 to 3<x cf. Fig 7b), further identical requests arrive within the time slot defined by x, which was started by the arrival of the first request 131, the requests 131, 141; and 181, are bundled and served via a multicast and/or broadcast transmission. Later incoming request beyond x are checked with the same principles within a new slot. In the embodiment of Fig. 7b) n is 3, i.e. three same requests are received within first time slot 1. Another request received at t=4 is transmitted in the next time slot 2.

The larger the timeframe is defined, the higher the likelihood of incoming request for identical content from that source. On the other hand, the user experience erodes if waiting time after a started request is too long. Accordingly the time to summarize user demands has to be aligned with user experience. The user felt Quality of Service, may even be depending on the urgency to get the requested data.

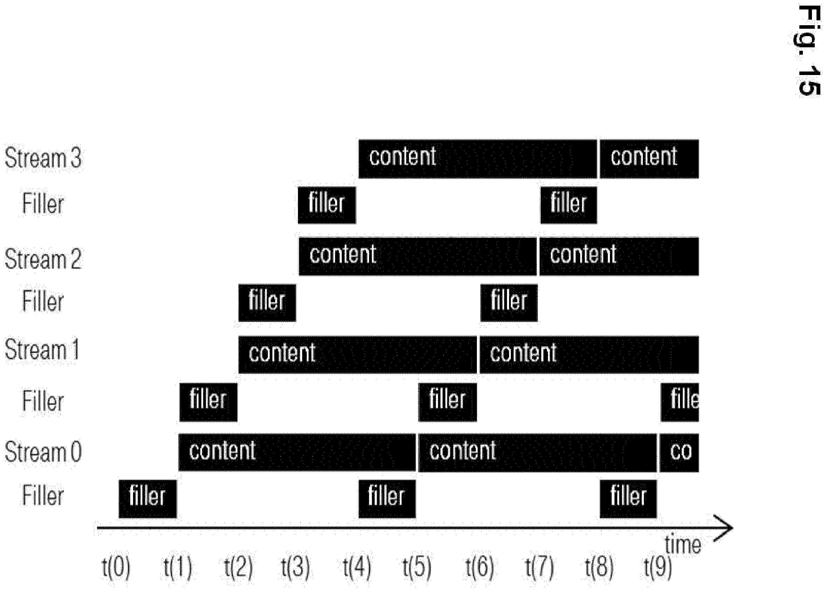

According to an embodiment of the invention, "filling content" up to advertising blocks could be used to bridge the time until the requested content transmission starts. Nevertheless, the described principle still remains with the time x to be defined considering technical aspects of the transmission like the time for transport in the network including buffering, see also Fig. 15 below.

In demand scenarios, where bursts for the same content occur within a narrow time frame, another embodiment of the invention can save capacity via broadcast and/or multicast. Multiple streams of the same content are sent out but each shifted in time compared to the other. On the client side this leads to the ability to jump to another time code just by changing the stream. To get an explicit time code, e.g. the beginning, synchronization to the related broadcast stream filler content is used as described above.

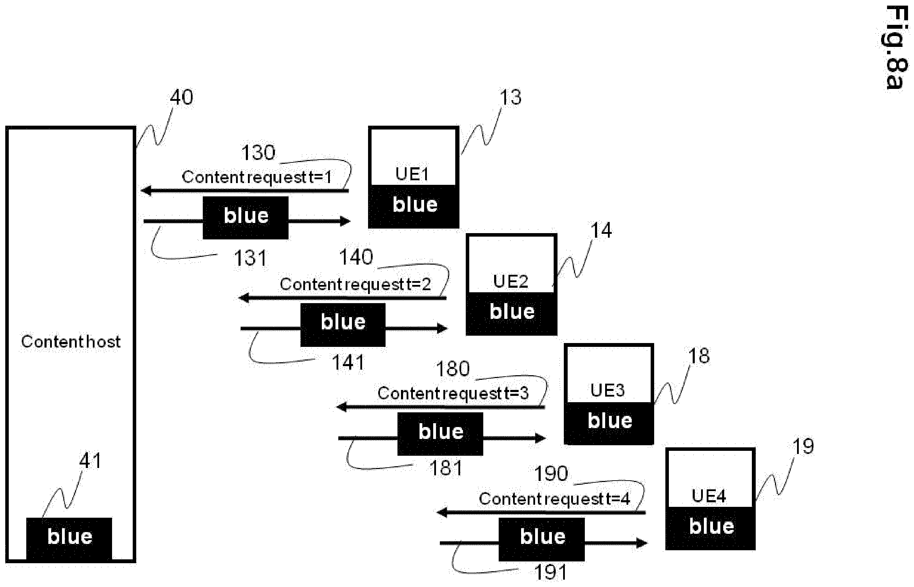

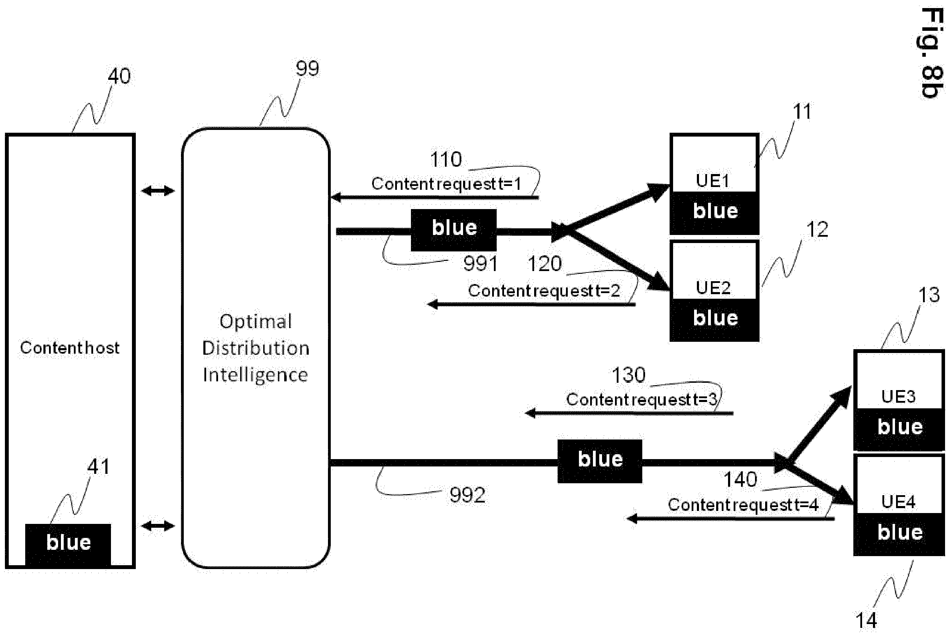

Figure 8 a) shows several user requests for identical content but distorted over time, which are treated separately, cf. Fig. 7a) Figure 8 b) shows active summarizing of several incoming requests on the next outgoing playout-sequence including an optimized multicast and/or/broadcast-distribution.

In detail, referring to Fig. 8a) UEs 11, 12, 13, and 14 send out the requests 110, 120, 130, and 140 for the same content 41 at different times t=1, t=2, t=3 and t=4, respectively. In a state of the art system these requests would be served via individual unicast transmissions, as shown in Fig. 8a). According to an aspect of the invention, these requests are processed in the ODI 99. The ODI is configured to collect the request and serve them at different times. That is, request 110 and 120 i.e. from t=1 to t=2 are bundled and served 991 together, preferably via multicast. Similarly, requests 130 and 140 i.e. from t=3 to t=4 are bundled and served 992 together, preferably via multicast.

As an example, a new episode of a famous series is played out on a certain day. According to an embodiment of the invention, at this day the distribution of parallel views will follow a typical distribution. In case the number of content streams is larger the ratio of the [Content duration] divided by [Filler duration], than it is more beneficial to stream [Content duration] divided by [Filler duration] streams via broadcast or multicast, each shifted in the time [Filler duration].

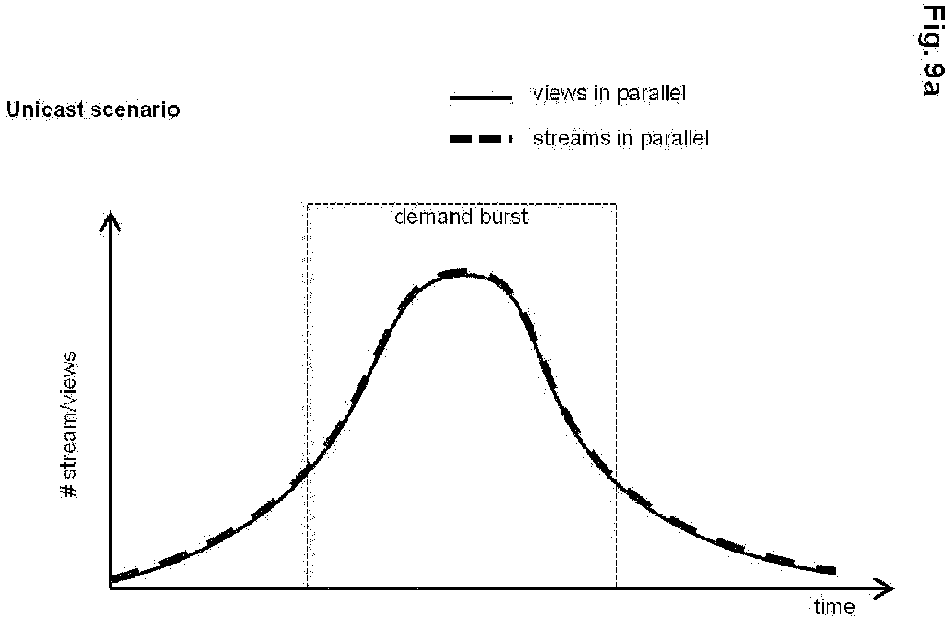

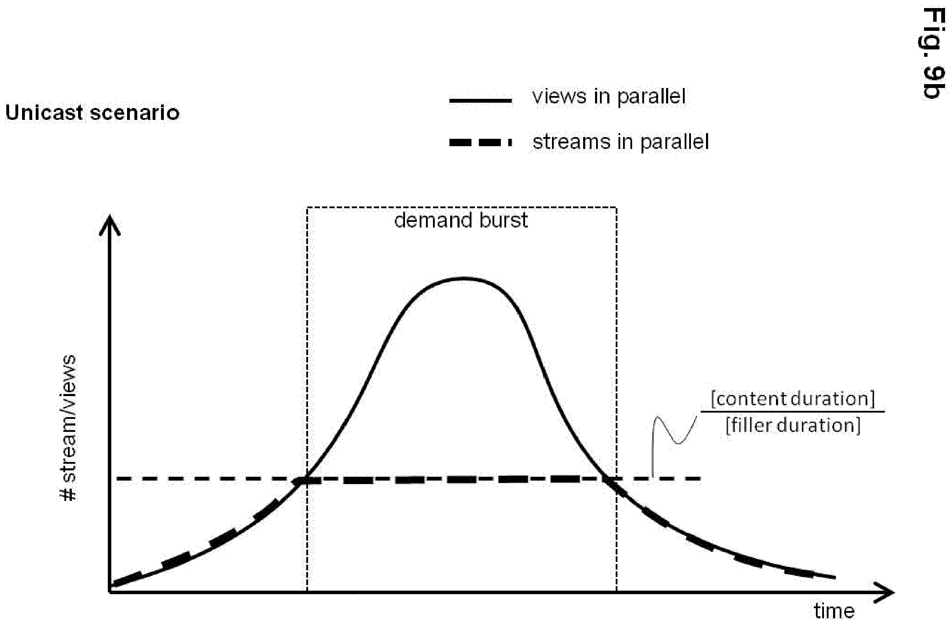

Figure 9 a) shows the number of streams and the number of views as a function of time in a burst-type streaming event and with unicast transmission. Figure 9 b) shows the number of streams and the number of views and streams as a function of time in a burst-type streaming event and with optimized multicast and/or broadcast transmission.

That is, Fig. 9 a) and b) illustrates the principle of improvement by summarizing content requests on the next slot for playout via multicast and/or broadcast recognizing the overall incoming sequential demand for a specific content.

In detail, as shown in Fig. 9a) the number of streams in parallel directly scales with the number of views, i.e. requests, over time. That is, for each new viewer a new stream is opened. In contrast, as shown in Fig. 9 b), when the optimization according to the invention is used, the maximum number of streams is limited at [Content duration] divided by [Filler duration].

The above described embodiments of the invention can be exercised at different locations in the network.

That is, the requests do not have to originate from an UE, the request may also originate from any source within the network. The same effect can be obtained if multicast and/or broadcast is used within the transport network. Even in cases where the requests originate from UEs, still the method and system according to the invention can be used to summarize the transmission of the content within the transport network based on multicast and/or broadcast.

In other words, to optimize latency not all request might be routed to one central server but a combination of a central server with a number of EDGE-servers close to customers might be in place. In this architecture a number of these EDGE-servers might start request to download content. For such instances in a network the mechanisms as described in this document may apply accordingly although not UEs are addressed.

That is further, the requests are collected at different locations at the edges of the transport network to serve UEs in the dependent access networks with multicast transmission from the EDGE server that downloaded the content upfront.

### III. Forecasting the content demand

The above described embodiments of the invention relate to an immediate user request and a multicast and/or broadcast transmission on the access line to the user's device have been described.

According to the invention, the transmission can be further optimized by the following two further aspects:
a) A preloading step of content via multicast and/or broadcast even before a user starts the request;
b) A storing step of content a user may request in the UE or very close to the UE in the network.

According to an embodiment of the invention, the most effective transmission with regard to the use of multicast and/or broadcast can be achieved, if those contents which may be requested by users can be predicted with a high likelihood and provided in a boost of information to the UE or at least close to the UE in the network based on multicast and/or broadcast.

Thus, it is an aspect of the invention to optimize expected content demands based on forecast methods to prepare specific data and forwarding said data to a defined centralized storage.

The inventors realized that a request for a specific content is not uniformly distributed over time but some content is requested more often in a period of time than other. This differs among consumers and their preferences and depends on framework conditions and specific events. In particular, in an event driven context, only a limited set of content compared to the entire base is requested in an upcoming relatively short period of time.

In a perfect situation such content can be predicted based on several indications and an intelligent analysis of a number of factors which may trigger a request for the content.

According to an embodiment of the invention, beyond relatively simple algorithms just combining certain usage patterns of a consumer based on behaviors in the past, more sophisticated mechanisms, preferably Artificial Intelligence, AI, -based methods are used to analyze a e widespread set of information to predict a user's upcoming content requests.

According to an embodiment of the invention, the AI analysis can be based on combining one or more of information about:
- preferences indicated by users themselves;
- user behavior in the past regarding content, time of consumption, and such;
- upcoming, plannable events, preferably public;
- framework conditions, even in short notice, which have potential to trigger user requests due to significance or match with preferences by the user;
- 'next content' proposal, whereas this proposal is biased by currently active broadcast streams;
- any other information which could support an analysis of upcoming requests.

The embodiments of the invention are not limited to any of the above listed inputs or any specific forecasting method. It is merely relevant that a forecasting result is obtained, i.e. potentially requested content has been identified.

According to the invention, based on the forecast the content is preloaded, preferably without cutting any other requests, - on or close to the UE based on a multicast and/or broadcast transmission.

In an embodiment of the invention, the content has been forecasted, therefore a number of contents will have some likelihood to be requested by multiple users. According to the invention, similar user requests are bundled and the content is uploaded based on a multicast and/or broadcast, either to an edge server to already bring content closer to a larger group of potential users or even on the group of user devices potentially requesting the context.

The effect of the predictive uploading via multicast and/or broadcast is increasing the efficiency in the network in two interrelated and multiplying ways. First, shifting the forecasted content to the UE or close to the UE before a certain boost appears, considering the state of the network, i.e. capacity and utilization, prevents the transport network from reaching the transportation limits. Second, because multicast and/or broadcast is applied, the transmission can be done be more efficiently compared to singular unicast transmission either for the route between the content hosting and an EDGE-server or between an EDGE-Server and the user devices in a coverage area.

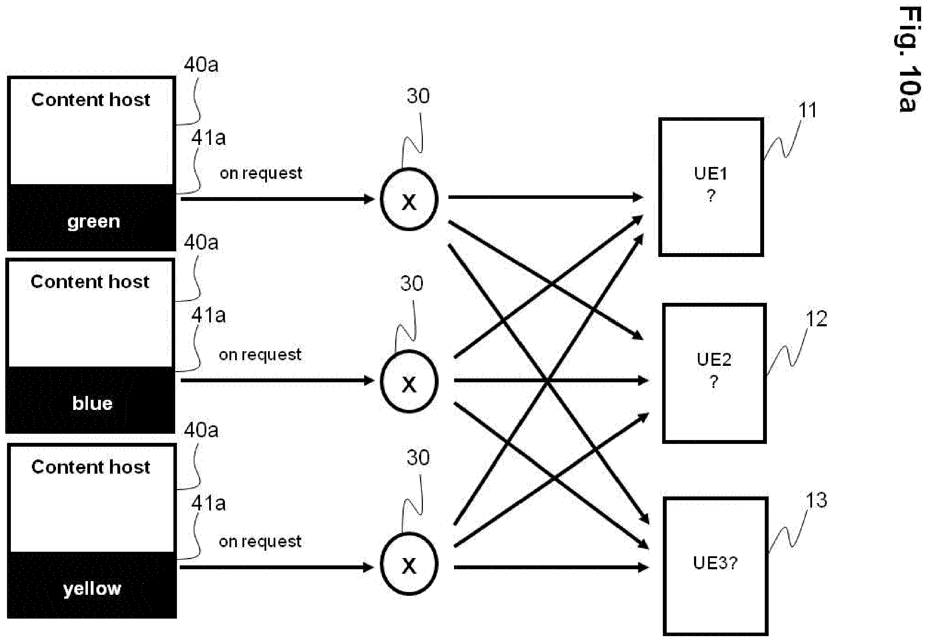

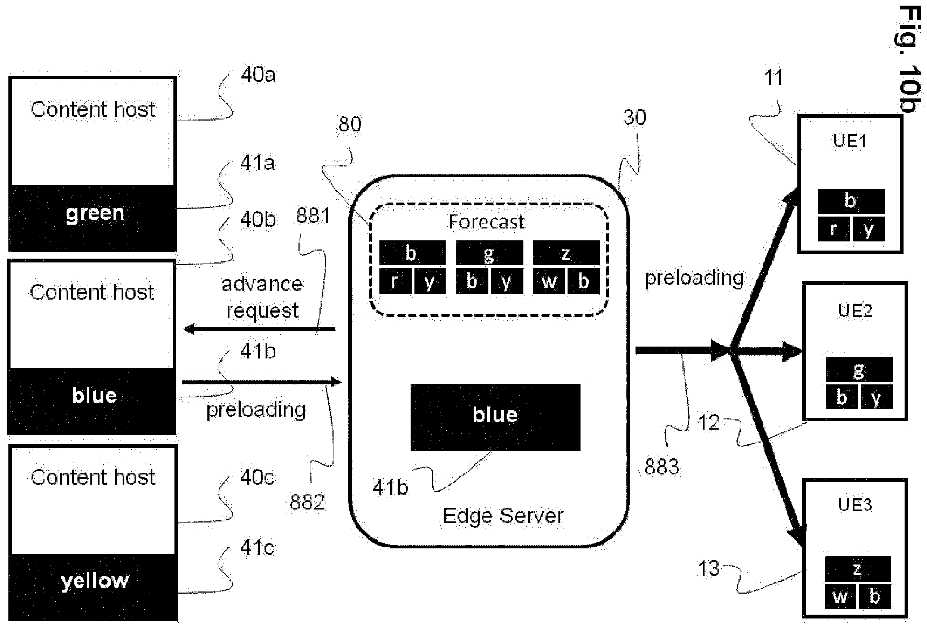

Figure 10 a) shows the content distribution without additional information and logic the system waiting for any user request for content. Figure 10 b) shows the preloading according to an embodiment of the invention.

In detail in Fig. 10a) three different content providers 40a), 40b), and 40c) provide three respective contents 41a), 41b), and 41c). The different contents are indicated by the terms "green", "blue", and "yellow" in the drawing. As soon as the content is requested via the transport network 30 from the UEs 11, 12, and 13. a separate unicast transmission is started. As detailed above the ⊗ in the figure symbolizes a network node 30.

In an embodiment of the invention, which is shown in Fig. 10b) a Most likely Content Intelligence, MCI, 80 is located in the transport network. As discussed before, the MCI is not necessarily a specific unit in the network. It is preferably a function of the network, which is preferably implemented distributed in the network.

The MDI is configured to analyze content requests and to forecast at least one further content 41b). The further content is requested by the transport network 30, preferably by the MCI 80, from the corresponding content provider 40b). Then the content is transmitted to the UEs 11, 12, and 13 based on a multicast and/or broadcast. That is the forecasted content is preloaded based on multicast and/or broadcast.

In detail, the MCI determines a forecast for each terminal device, the forecasts may differ in detail, which is illustrates by the different letters shown in the MCI. "b" indicates a forecast for blue content 41b). Since the blue content is a common forecast for all considered UEs, the content is preloaded to the UEs.

Alternatively or additionally, in an embodiment of the invention, the forecasted content is preloaded to a storage closer to the UE for which the content was forecasted, preferably into a storage of the access network, cf. Figs. 1 and 2.

Alternatively or additionally, in an embodiment of the invention, the forecast is not based on a UE but on a part of the transport network itself. The forecasted content is preloaded to a storage closer to the part of the transport network for which the content was forecasted, preferably into a storage of the access network, cf. Figs. 1 and 2.

In other words, the MCI is configured to analyze incoming requests based on a plurality of information and to forecast at least one content. The forecast triggers the preloading of the forecasted content by multicast and/or broadcast.

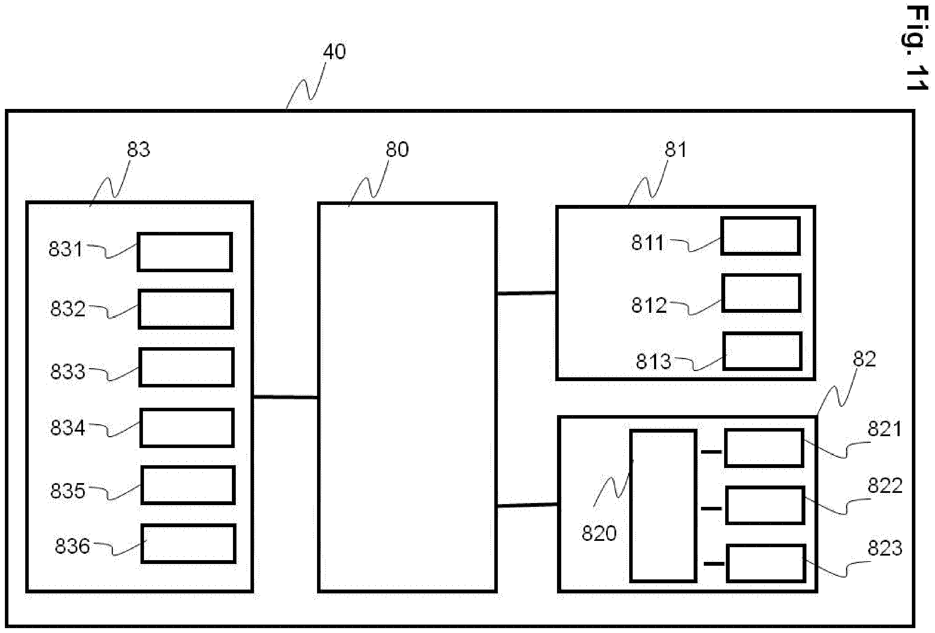

Fig. 11 shows content prediction according to an embodiment of the invention. To obtain a forecast the content hosting instance 40 contains a data analytics unit 80 configured to perform an analysis and to provide at least one forecast. The data analytics unit 80 is an embodiment of the MCI.

According to the invention, the data analytics unit 80 is configured to base the analysis and the forecast on at least one of two sets of information. The first set of information comprises framework information, which may influence the request for specific content 81. The second set of information comprises user information 82.

Framework information may comprise very different sets of information such as one or more of: external data from news 811, from general sports and other upcoming event announcements 812, or from analytics in social media on rapidly growing topics circulating on that platform 813 etc.

User information comprises revealed information of the user such as one or more of: actively stated preferences by the user 821, statistical data about usage/content demands in the past 822, performed click rates by the user on already recommended content, or advertisement in context with the previous content consumption 823.

In an embodiment of the invention, the user information is combined with a device data base 820 to match the information about preferences with a specific device or with the respective user behind the specific device.

Based on all the above information the data analytics unit 80 is configured to forecast at least one content. This results in a preselection of content which is able and likely to fit to upcoming user demand. The entire content store 83 contains a multitude of different content files 831 to 836, which could be subject of the above preselection.

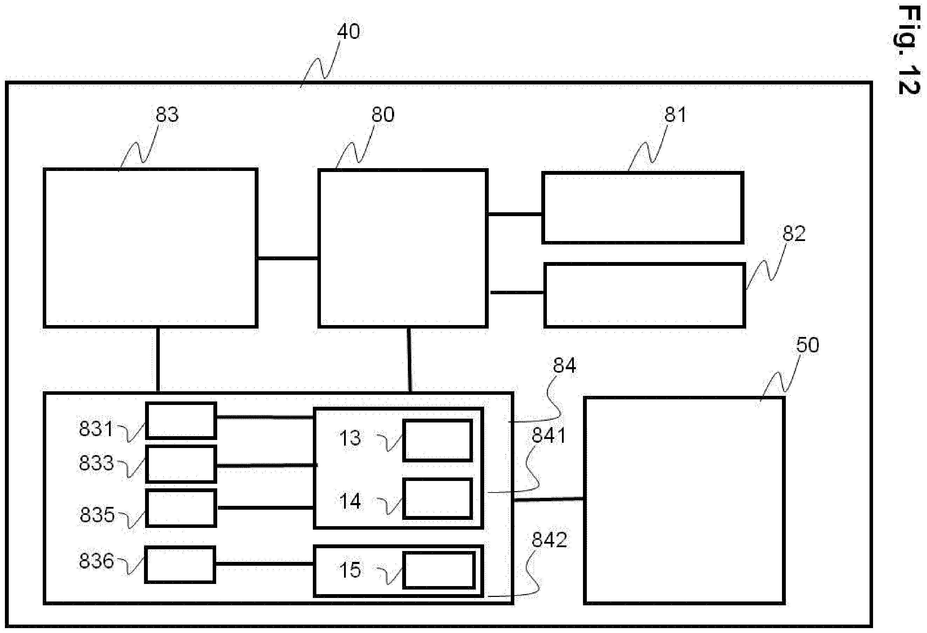

Fig. 12 shows a distribution of preselected content according to an embodiment of the invention. In an embodiment of the invention, after the data analytics unit 80 forecasted, which of the content files may be subject of increased demand due to the analysis of the framework conditions 811 to813 and/or known consumers preferences 821 823. Accordingly, those content files 831, 833, 835, 836, as an example, are preselected by a preloading unit 84.

Not all users have the same preferences and shall receive the same bundle of files for preload. Nevertheless, due to the forecast and preselection, there is some likelihood that some of the data packages should be forwarded not only to a single user but to a plurality of users. By this the precondition for a multicast and/or broadcast transmission is achieved.

In an embodiment of the invention, the users, respectively the UEs 13, 14, and 15 are identified based on a subscription or a previous content request as the potential target for such content request. The according user/device information is available 82 and the MCI is configured to address the content packages for forwarding, i.e. preloading, those to the users. Based on this preparation the content files are handed over to the content delivery instance 50 for delivery.

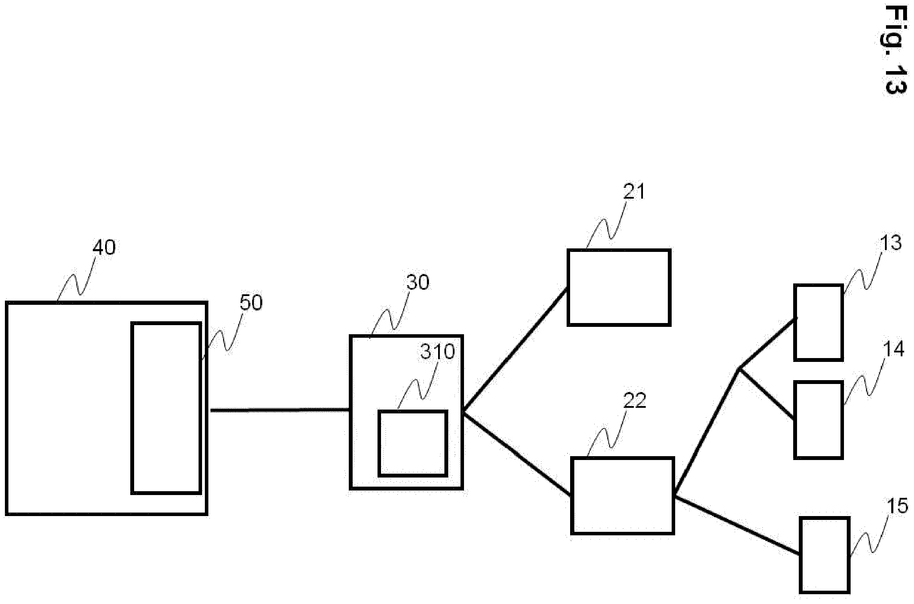

Fig. 13 shows forwarding of the predicted content according to an embodiment of the invention. To transport the content closer to the user already before the user actively demands this content the prepared content files are forwarded to the potential users, i.e. the UE. Preloading could mean that content is received from a content delivery instance 50 and stored in an instance between the user's device and the content instance, e.g. in a specific EDGE Cloud 310 within the EDGE server 30 alongside the transport and aggregation network. By this the content as already closer to the user, which decreases runtimes for any further transport to the user's device and avoids any bottlenecks on the content hosting instance 40 in case of a massive request for content or technical issues in this instance.

The content could be as well forwarded to the UE itself which furthermore decreases runtimes and enables direct access by the user to the content without using any network resources anymore since the content is already on the device. In this case, information from the preloading instance indicates that a number of devices shall receive the same content files.

Based on this information the access network 22 is configured to transmit the forecasted files based on a multicast and/or broadcast transmission to those devices which should receive the same content files 13 and 14, while the remaining devices 15 are served via a unicast transmission.

It is a further aspect of the invention to optimize expected or predicted content demands bursts to prepare specific data forwarding.

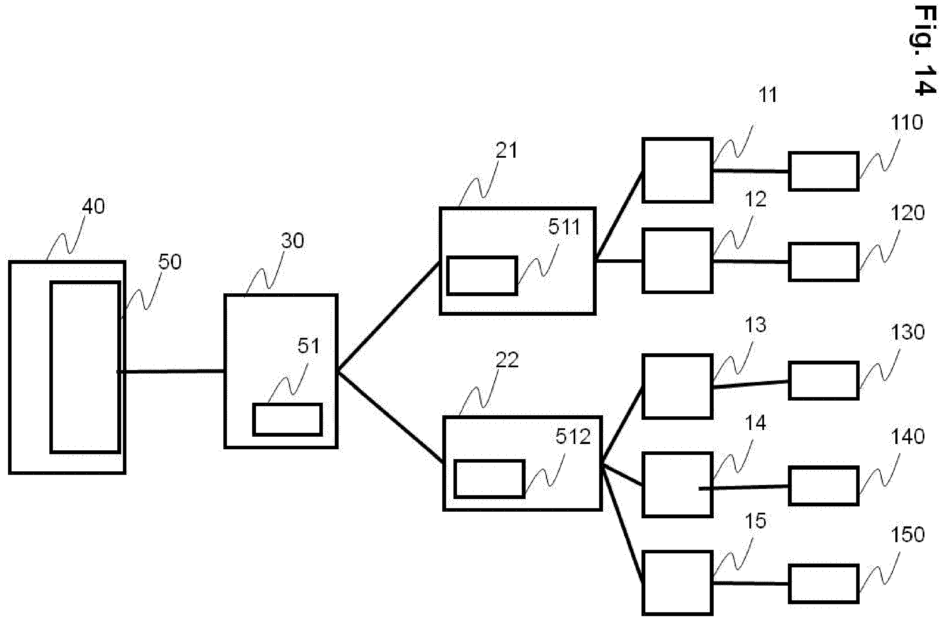

Fig. 14 shows the preparation of specific data forwarding according to an embodiment of the invention.

In demand scenarios, where bursts for the same content occur within a narrow time frame, according to the invention network capacity can be saved, by optimization of the transmission via multicast and/or broadcast.

Content burst occur due to customers behavior, e.g. content consumption after dinner, or content distribution strategies, e.g. new episode each Friday, but often due to a combination of such effects. However, these bursts are predictable.

In this scenario, the content delivery instances 50 comprises distributed instances, cf. Fig 14; instances51, 511, 512 across the delivery chain.

Each one of the content delivery instances 51, 511, 512 is configured to collect and store content requests in caches as detailed above when referring to Fig 4 and caches 410,420, and 430.

Fig. 15 shows the filling of content according to an embodiment of the invention. Said caches collect content request related to the same content within a predefined time period. The content delivery instance delivers a filler content, preferably and advertisement, to each terminal in the cache.

If the time period for a cache, i.e. the time x is over and/or the amount of cached requests, i.e. the benchmark n, justifies a multicast and/or broadcast transmission, the delivery instance starts to send the content stream, cf. Fig. 15 "Stream 0" via broadcast/multicast transmission to the respective terminal devices.

The concept of a time x and a benchmark n is highly use case dependent and highly flexible. Depending on the content and the access network there is a maximum time a user will tolerate to wait for a content. The longer the time the more requests can be bundled, however, also the user experience decreased with at a certain time. At the same time the higher the number n the more requests are bundled, but also the higher the risk, that not enough requests can be collected. Also, a number n smaller that 3 obviously does not provide any significant benefit.

In other words, the basic concept is that until the time x is over and/or a benchmark n is met, a filler content is provided and then a broadcast and/or multicast is started. The time-frame, i.e. the bundling periods, may be defined freely.

Content requests within the next time period get filler content too. When the time period ends, the delivery instance starts to send a new broadcast stream, i.e. Stream 1, to the respective terminal devices.

Fig. 15 shows multiple streams according to an embodiment of the invention. Multiple streams of the same content are sent out in loops, but each shifted in time compared to the other. On client side this leads to the ability to jump to another, relative time code just by changing the stream. To get an exact time code, e.g. the beginning, synchronization to the related broadcast-stream uses filler content.

To enable the terminals to match time code change requests, e.g. forward, backward or exact position, with the related stream, in an embodiment of the invention, the delivery instances broadcasts an encoded list of current active streams to the UE.

The described three areas for innovative design can be regarded separately and as single ideas. The full advantage and major part of the intended objective to increase the objective for common content requests and by that advanced options for the use of multi-/broadcast-transmission to improve network efficiency is given by a combination of all parts.

That is, according to the invention, the steps of predicting content requests in the near future, pushing predicted content to the edge of the transport network and/or near to the UEs via multicast, and shaping requests in time to deliver content via broadcast/multicast to the UEs reduce outgoing traffic burst on content server side, reduce traffic in the transport network, and reduce traffic in the access network.

### IV Specific advantage and Use Case

In a real world application, a clear distinction between mobile and fixed devices is not always possible, as well as a clear distinction between mobile and stationary use. Devices have a number of potential access options and could build up connectivity via a number of said access options.

Access options and access networks can be either physical, e.g. fiber or wire, or logical resources, e.g. frequency, transmission channel, or network slice.

With an overarching analysis considering different available access options and the requested content a broader base for the decision on the use of multicast and/or broadcast is given. Although in individual perspective, each user has a good access network available and gets the requested data stream with a good quality of service, this may be not optimal for entire network capacity, if all users are connected via different access technologies.

In an example use case there is Champions-league quarter-final with two German teams involved, but not in a direct match against each other but one against the Spanish, the other against the French national champion. Both matches run in parallel, one is transmitted live in a Public Broadcast in usual TV-stream and via a streaming portal, the other available in PayTV. On top PayTV offers a summary of all parallel matches after the live transmission.

Furthermore, the use case has in one coverage area a plurality of users with at least one user each being connected via a WLAN hotspot, via the Mobile Network and via DVBT, but with all involved devices capable of LTE and with sufficient LTE coverage in the spot. Usually, each user gets a different access depending on settings of device or input of the user.

According to the invention, the system is configured to recognize that most users are requesting the same live content, either match 1 or match 2. It makes sense, regarding the efficiency perspective for entire used capacity in the network, to connect all those users via the available LTE connectivity and to use a broadcast-mode.

In result, all these users get the content either for match 1 or match 2, but less capacity in all networks is used. For the individual user there is a good chance that the perceived Quality of Service based on pure available bandwidth concentrated on the broadcast-stream could be even higher for all connected users.

Given, that all users watching match 1 or match 2 seem to be interested in soccer, there is some likelihood that at least those of them who have the subscription for the PayTV-Channel will switch after the live match to the recorded match they have not seen due to their first preference. It is furthermore likely that they do this directly after the first match ended. In other words, it is possible to forecast a content which is likely to be requested.

According to the invention, the MCI is configured to recognize the preferred content, potential subscriptions, available content options now and in next period, etc. an analysis can be performed which results in a sound forecast. In this case, the group of viewers of the matches, which have a PayTV-subscription will demand a specific content.

In an embodiment of the invention, based on the forecast analysis the system prepares the content distribution to enable an improved Quality of Service-Experience. One option is preloading, the other - not excluding the first - once again a broadcast transmission given a sufficient number of user.

Since it is not anymore the live content, the start of the specific user request may differ a little bit, but in this case building up slots with bundling requests for the content within a certain timeframe once again increases likelihood to have parallel request and to serve them via a broadcast-distribution.

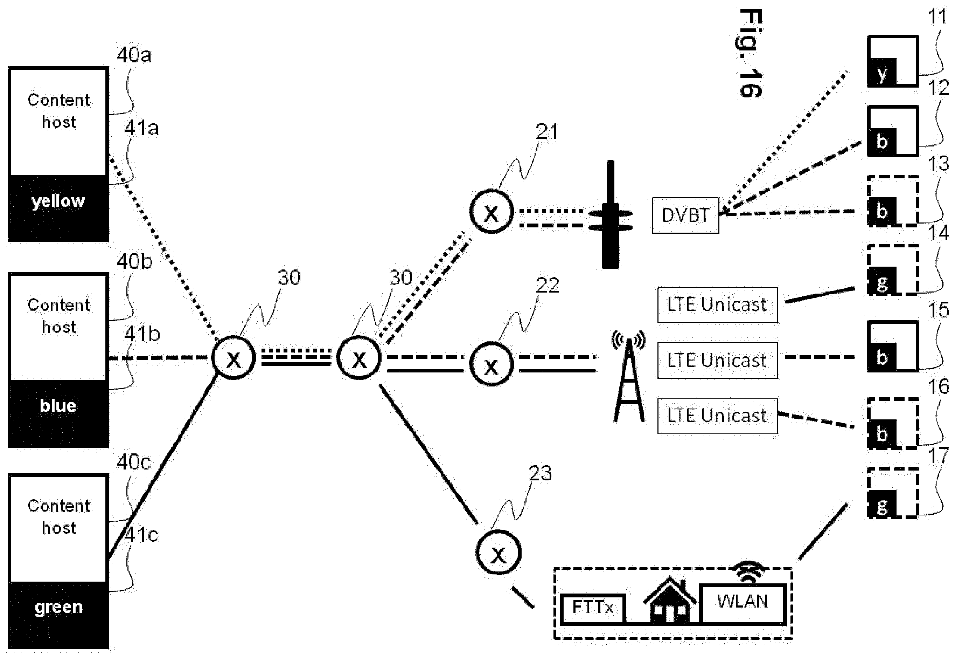

Figs 16, 17, and 18 show the above discussed use case.

Figure 16 shows the transmission of a content without any optimization. In this: content 41a, 41b, and 41c from three sources 40a, 40b, 40 c is provided via different access options 21, 22, 23, to users according to user's preferences and access rights to available content at that point of time. The content is illustrated by the letters "yellow" 41a; "blue" 41b, and "green" 41c. The corresponding delivery is indicated as dotted line for content yellow; as short dashed line for content blue; and as solid line for content green. The special access rights are indicated by the frame of the UE: a solid frame indicates a normal user and the dashed frame a user with pay-TV subscription, i.e. a special access right. Furthermore the letters "y" for yellow, "b" for blue, and "g" for green indicate the content on the respective UE 11, 12, 13. 14, 15, 16, and 17.

In detail, UEs 11 12 and 13 are connected to the transport network 30 via a first access option 21, preferably a DVBT signal. UEs 14, 15, and 16 are connected to the transport network 30 via a second access option 22, preferably a LTE unicast connection. UE 17 is connected to the transport network 30 via a third access option 23, preferably via a wired internet connection and a Wifi router. Three content providers 40a, 40b, and 40c are connected to the transport network 30.

It is noted that DVBT and LTE are only two access technologies. The specific terms are used to refer to the more general technology. That is DVBT also refers to the group of digital broadcasting technologies comprising DAB, ATSC and such. Furthermore, LTE also refers to mobile telecommunication technologies, comprising 3G, 5G, 6G, and such.

Content provider 40a provides some unrelated content 41a, yellow, which is only viewed, i.e. requested, by UE 11.

The second content provider 40b provides a relevant first content 41b, which preferably is the first match as described above. The first content, blue, is viewed, i.e. requested by UEs 12, 13, 15, and 16. That is, the content is viewed via DVBT and LTE, but transported via the same transport network.

The third content provider 40c provides a relevant second content 41c, which preferably is the second match as described above. The second content is viewed, i.e. requested by UEs 14 and 17. That is, the content is viewed via LTE and internet, but transported via the same transport network.

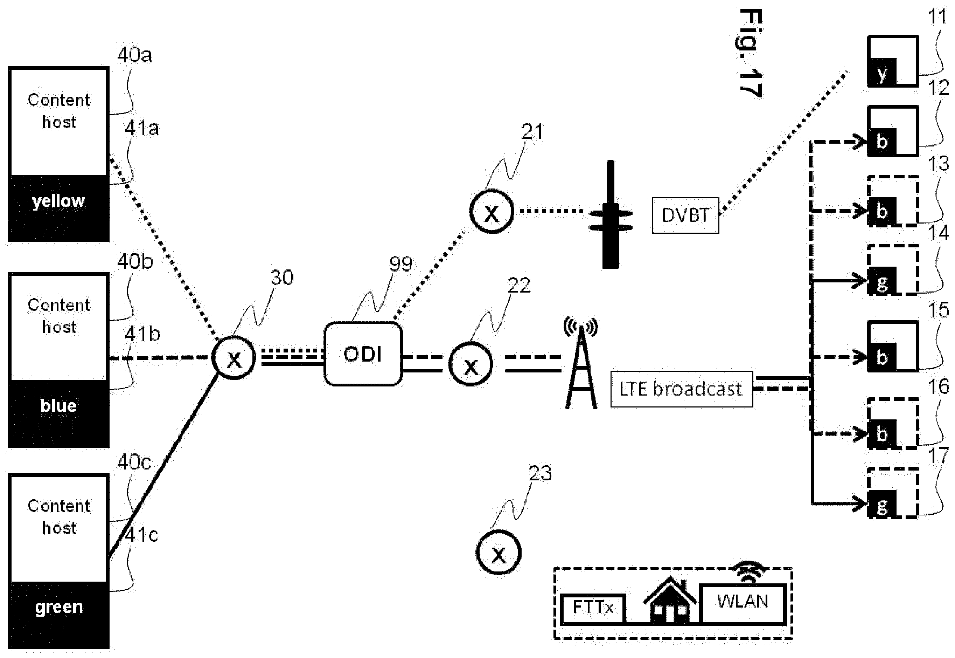

Figure 17 shows the transmission of a content optimization according to an embodiment of the invention, It is assumed in this example, that devices 12 to 17 could have access and get served via access network 22. By analysis of all content requests and available access options the system, preferably the ODI 99, determined that most of the UEs can be serviced by one access network 22, furthermore due to the request of only two different content streams a multicast and/or broadcast transmission can be started.

By this a more efficient transmission with regard to the overarching use of network capacity using multi/broadcast-transmission can be applied for all identical requests.

In an embodiment of the invention, the ODI 99 is configured to analyze the request and to optimize the distribution as described above. In detail, all requests from UEs, 12 to 17 are bundled and only two streams are sent to access option 22, i.e. the LTE access network. Furthermore, instead of individual unicast transmissions only two multicast and/or broadcast transmissions are used to serve UEs 12, 13,15 and 16, with the first content 41b, i.e. match 1, and UEs 14 and 17 with the second content 41c, i.e. match 2, respectively.

The wired internet link is not used and DVBT is only used by UE 11 in the optimized distribution. The transport network only handles two soccer streams. The streams of the unrelated content 41a and the streams of the two contents 41b and 42c have more network recourses available.

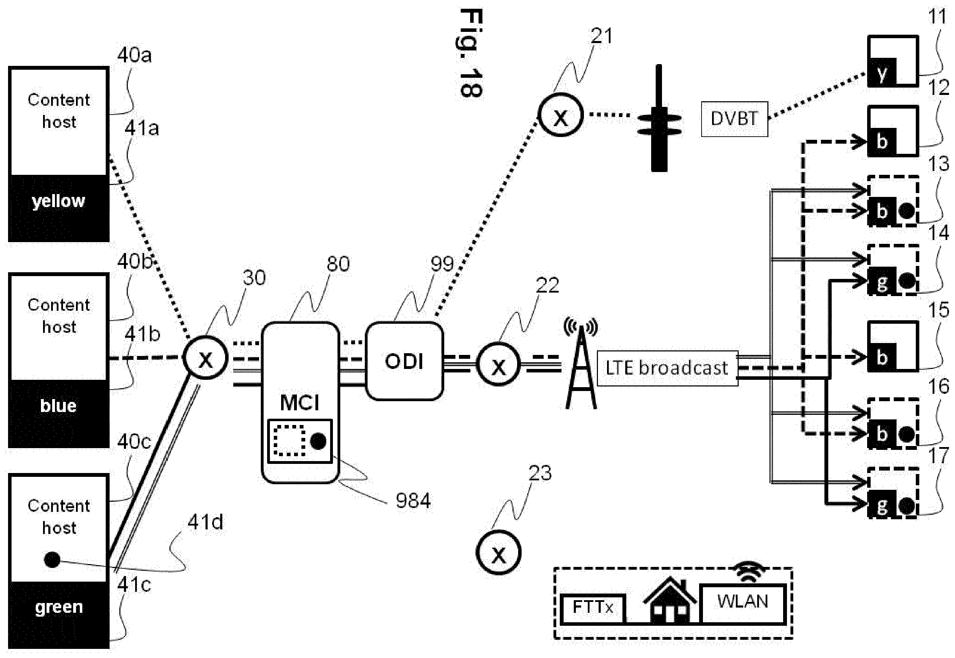

Figure 18 shows the transmission of a content optimization according to an embodiment of the invention.

In an embodiment of the invention, the MCI 80, is configured to obtain at least one forecast for the additional content 41d provided also by the third content provider 40c. Preferably the forecast is determined during ongoing transmission. In this case the forecast is based on revealed preferences, i.e. which match is watched and subscriptions to PayTV, which is indicated by to the dashed frame of the respective UE 13, 14, 16, and 17 in Fig. 16 to 18. The system determined via the MCI that, once the live match, i.e. content blue or green, is over, further content 41d with similar context should be available in the next time period t+1 after the live content.

Furthermore the system determines via the MCI, those users potentially interested in soccer for the next time period due to their previous content consumption. According to the invention, based on the forecast of the MCI content 41d is available on an EDGE-Server closer to user, preferably in period t+1, i.e. the time period after the current time period t=0. Therefore the content is preloaded already in t=0 to the EDGE-Server closer to user.

In an embodiment of the invention a multicast and/or broadcast-transmission will be applied again if minimum number of parallel users met either by collecting requests or by alignment over time.

### V Summary

According to the invention, the likelihood for efficiency gains by multicast and/or broadcast transmission is increased in combination with preloading of forecasted content closer to user's devices.

Overarching monitoring of several access options of a user's terminal device for the reception of content technologies is connected with an analysis for an optimal data transmission considering all available content requests in a certain area and time and the available access networks for the respective devices.

Optimization of the distribution is based on alignment of different content requests in time to enable multicast and/or broadcast transmission.

Preloading of forecasted content to a defined centralized storage is performed based on multicast and/or broadcast.

What has been described and illustrated herein are embodiments of the invention along with some of variations. The terms, descriptions and figures used herein are set forth by way of illustration only and are not meant as limitations. Those skilled in the art will recognize that many variations are possible within the scope of the present invention as defined by the appended claims.

## Claims

1. A method for usage optimization in a communication network,
wherein the communication network comprises:
a) at least one content host (40), configured to provide at least one content;
b) a plurality of content requesting units (11, 12, 13, 14, 15), configured to send a content request (110, 120,130,140, 150) to a content host (40) and to receive content via at least one access option;
c) one or more access network units (21, 22) configured to provide one or more access option to one or more of the content requesting units and further configured to receive content requests from and delivering content to a respective content requesting unit; and
d) a transport network (30) configured to transport content requests sent from a respective content requesting unit, via an access option of a respective access network unit, to a respective content host and to deliver content from the content host to the respective access network unit;
wherein the method comprises
i) an analyzing step, performed in the transport network, in which a plurality of content requests is collected and analyzed;
ii) an optimizing step, performed in the transport network, in which the content delivery via the transport network and/or via the access network unit is optimized based on the analysis result; and
wherein each content request comprises information about the requested content and information about the sending content requesting unit, information about the access options available to the sending content requesting unit, and information about the respective connecting access network unit;
wherein the analyzing step comprises an identifying step, in which similar content requests are identified; and
wherein the optimizing step comprises a bundling step, in which the content delivery corresponding to the identified similar content requests are bundled with respect to a common access option.

2. The method according to claim 1,
wherein the identifying step comprises identifying similar content requests within a predetermined time limit; and/or
wherein the bundling step comprises waiting until a predetermined number n of similar content requests has been identified or the predetermined time limit has lapsed; and
wherein the content is delivered in a multicast and/or broadcast transmission via the common access option.

3. The method according to claim 2,
wherein for each content request a unicast transmission is maintained until similar requests are identified, and the unicast transmission is switched to the multicast and/or broadcast transmission.

4. The method according to any one of the claims 1 to 3,
wherein the optimizing step comprises recommending or commanding a change of the access option and/or the access network unit to one or more of the content requesting units.

5. The method according to any one of claims 1 to 4,
wherein the method further comprises forecasting a content request for at least one content requesting unit and/or access network unit; and
wherein the method further comprises storing the content corresponding to the forecasting result in at least one network component close to the at least one content requesting unit.

6. The method according to claim 5
wherein the method further comprises performing a corresponding transmission of the said content as a multicast and/or broadcast transmission.

7. The method according to any one of claims 1 to 6,
wherein the access network unit is one or more of: a telecommunication network base station, a router, a switch, a cache, a DVB, DAB, ATSC, ISDB, DTMB, MBMS, eMBMS, feMBMS sending unit, a cable TV sending unit.

8. The method according to any one of claims 1 to 7,
wherein the access option is one or more of: a network slice, a transmission frequency, a wired network connection, a wireless network connection, a telecommunication protocol.

9. An apparatus for usage optimization in a communication network,
wherein the communication network comprises:
a) at least one content host (40), configured to provide at least one content;
b) a plurality of content requesting units (11, 12, 13, 14, 15), configured to send a content request (110, 120,130,140, 150) to a content host (40) and to receive content via at least one access option;
c) one or more access network units (21, 22) configured to provide one or more access option to one or more of the content requesting units and further configured to receive content requests from and delivering content to a respective content requesting unit; and
d) a transport network (30) configured to transport content requests sent from a respective content requesting unit, via an access option of a respective access network unit, to a respective content host and to deliver content from the content host to the respective access network unit;
wherein the apparatus is implemented in the transport network and configured to
i) perform an analyzing step in which a plurality of content requests is collected and analyzed; and
ii) perform an optimizing step in which the content delivery via the transport network and/or via the access network unit is optimized based on the analysis result; and
wherein each content request comprises information about the requested content and information about the sending content requesting unit, information about the access options available to the sending content requesting unit, and information about the respective connecting access network unit;
wherein the analyzing step comprises an identifying step, in which similar content requests are identified; and
wherein the optimizing step comprises a bundling step, in which the content delivery corresponding to the identified similar content requests are bundled with respect to a common access option.

10. The apparatus according to claim 9 further configured to perform any of the method steps of claims 2 to 4.

11. The apparatus according to claim 9 or 10 further configured to
a) forecast a content request for at least one content requesting unit and/or access network unit; and
b) store the content corresponding to the forecasting result in at least one network component close to the at least one content requesting unit.

12. The apparatus according to claim 11 further configured to
c) perform a corresponding transmission of said content as a multicast and/or broadcast transmission.

13. The apparatus according to any one of claims 9 to 12,
wherein the access network unit is one or more of: a telecommunication network base station, a router, a switch, a cache, a DVB, DAB, ATSC, ISDB, DTMB, MBMS, eMBMS, feMBMS sending unit, a cable TV sending unit.

14. The apparatus according to any one of claims 9 to 13,
wherein the access option is one or more of: a network slice, a transmission frequency, a wired network connection, a wireless network connection, a telecommunication protocol.

## Patentansprüche

1. Verfahren zur Nutzungsoptimierung in einem Kommunikationsnetzwerk,
wobei das Kommunikationsnetzwerk umfasst:
a) zumindest einen Inhaltshost (40), der so konfiguriert ist, dass er zumindest einen Inhalt bereitstellt;
b) eine Vielzahl von Inhaltsanforderungseinheiten (11, 12, 13, 14, 15), die so konfiguriert sind, dass sie eine Inhaltsanforderung (110, 120, 130, 140, 150) an einen Inhaltshost (40) senden und Inhalte über zumindest eine Zugangsoption empfangen;
c) eine oder mehrere Zugangsnetzwerkeinheiten (21, 22), die so konfiguriert sind, dass sie eine oder mehrere Zugangsoptionen für eine oder mehrere der Inhaltsanforderungseinheiten bereitstellen, und die ferner so konfiguriert sind, dass sie eine Inhaltsanforderung von der jeweiligen Inhaltsanforderungseinheit empfangen und den Inhalt an diese liefern; und
d) ein Transportnetzwerk (30), das so konfiguriert ist, dass es Inhaltsanforderungen, die von einer jeweiligen Inhaltsanforderungseinheit über eine Zugangsoption einer jeweiligen Zugangsnetzwerkeinheit gesendet werden, zu einem jeweiligen Inhaltshost transportiert und Inhalte von dem Inhaltshost an die jeweilige Zugangsnetzwerkeinheit liefert;
wobei das Verfahren umfasst:
i) einen Analyseschritt, der in dem Transportnetzwerk ausgeführt wird, in dem eine Vielzahl von Inhaltsanforderungen gesammelt und analysiert wird;
ii) einen Optimierungsschritt, der in dem Transportnetzwerk ausgeführt wird, in dem die Inhaltsbereitstellung über das Transportnetzwerk und/oder über die Zugangsnetzwerkeinheit basierend auf dem Analyseergebnis optimiert wird; und
wobei jede Inhaltsanforderung Informationen über den angeforderten Inhalt und Informationen über die sendende Inhaltsanforderungseinheit, Informationen über die der sendenden Inhaltsanforderungseinheit zur Verfügung stehenden Zugangsoptionen und Informationen über die jeweilige verbindende Zugangsnetzwerkeinheit umfasst; wobei der Analyseschritt einen Identifizierungsschritt umfasst, in dem ähnliche Inhaltsanforderungen identifiziert werden; und
wobei der Optimierungsschritt einen Bündelungsschritt umfasst, in dem die den identifizierten ähnlichen Inhaltsanforderungen entsprechende Inhaltsbereitstellung in Bezug auf eine gemeinsame Zugangsoption gebündelt wird.

2. Verfahren nach Anspruch 1,
wobei der Identifizierungsschritt das Identifizieren ähnlicher Inhaltsanforderungen innerhalb eines vorbestimmten Zeitlimits umfasst; und/oder
wobei der Bündelungsschritt ein Warten umfasst, bis eine vorbestimmte Anzahl n ähnlicher Inhaltsanforderungen identifiziert wurde oder das vorbestimmte Zeitlimit verstrichen ist; und
wobei der Inhalt in einer Multicast- und/oder Broadcast-Übertragung über die gemeinsame Zugangsoption bereitgestellt wird.

3. Verfahren nach Anspruch 2,
wobei für jede Inhaltsanforderung eine Unicast-Übertragung solange aufrechterhalten wird, bis ähnliche Anforderungen identifiziert werden und von der Unicast-Übertragung auf die Multicast- und/oder Broadcast-Übertragung umgeschaltet wird.

4. Verfahren nach einem der Ansprüche 1 bis 3,
wobei der Optimierungsschritt ein Empfehlen oder Anweisen einer Änderung der Zugangsoption und/oder der Zugangsnetzwerkeinheit an eine oder mehrere der Inhaltsanforderungseinheiten umfasst.

5. Verfahren nach einem der Ansprüche 1 bis 4,
wobei das Verfahren ferner eine Vorhersage einer Inhaltsanforderung für zumindest eine Inhaltsanforderungseinheit und/oder Zugangsnetzwerkeinheit umfasst; und wobei das Verfahren ferner ein Speichern des dem Vorhersageergebnis entsprechenden Inhalts in zumindest einer Netzwerkkomponente in der Nähe der zumindest einen Inhaltsanforderungseinheit umfasst.

6. Verfahren nach Anspruch 5,
wobei das Verfahren ferner eine Durchführung einer entsprechenden Übertragung des Inhalts als Multicast- und/oder Broadcast-Übertragung umfasst.

7. Verfahren nach einem der Ansprüche 1 bis 6,
wobei die Zugangsnetzwerkeinheit eine oder mehrere der folgenden Einheiten ist: eine Telekommunikationsnetzwerk-Basisstation, ein Router, ein Switch, ein Cache, eine DVB-, DAB-, ATSC-, ISDB-, DTMB-, MBMS-, eMBMS-, feMBMS-Sendeeinheit, eine Kabel-TV-Sendeeinheit.

8. Verfahren nach einem der Ansprüche 1 bis 7,
wobei die Zugangsoption eine oder mehrere der folgenden Optionen ist: eine Network-Slice, eine Übertragungsfrequenz, eine drahtgebundene Netzwerkverbindung, eine drahtlose Netzwerkverbindung, ein Telekommunikationsprotokoll.

9. Einrichtung zur Nutzungsoptimierung in einem Kommunikationsnetzwerk,
wobei das Kommunikationsnetzwerk umfasst:
a) zumindest einen Inhaltshost (40), der so konfiguriert ist, dass er zumindest einen Inhalt bereitstellt;
b) eine Vielzahl von Inhaltsanforderungseinheiten (11, 12, 13, 14, 15), die so konfiguriert sind, dass sie eine Inhaltsanforderung (110, 120, 130, 140, 150) an einen Inhaltshost (40) senden und Inhalte über zumindest eine Zugangsoption empfangen;
c) eine oder mehrere Zugangsnetzwerkeinheiten (21, 22), die so konfiguriert sind, dass sie eine oder mehrere Zugangsoptionen für eine oder mehrere der Inhaltsanforderungseinheiten bereitstellen, und die ferner so konfiguriert sind, dass sie Inhaltsanforderungen von der jeweiligen Inhaltsanforderungseinheit empfangen und Inhalte an diese liefern; und
d) ein Transportnetzwerk (30), das so konfiguriert ist, dass es Inhaltsanforderungen, die von einer jeweiligen Inhaltsanforderungseinheit über eine Zugriffsoption einer jeweiligen Zugangsnetzwerkeinheit gesendet werden, zu einem jeweiligen Inhaltshost transportiert und Inhalte von dem Inhaltshost an die jeweilige Zugangsnetzwerkeinheit liefert;
wobei die Einrichtung in dem Transportnetzwerk implementiert und konfiguriert ist, um
i) einen Analyseschritt auszuführen, in dem eine Vielzahl von Inhaltsanforderungen gesammelt und analysiert wird; und
ii) einen Optimierungsschritt auszuführen, in dem die Inhaltsbereitstellung über das Transportnetzwerk und/oder über die Zugangsnetzwerkeinheit basierend auf dem Analyseergebnis optimiert wird; und
wobei jede Inhaltsanforderung Informationen über den angeforderten Inhalt und Informationen über die sendende Inhaltsanforderungseinheit, Informationen über die der sendenden Inhaltsanforderungseinheit zur Verfügung stehenden Zugangsoptionen und Informationen über die jeweilige verbindende Zugangsnetzwerkeinheit umfasst; wobei der Analyseschritt einen Identifizierungsschritt umfasst, in dem ähnliche Inhaltsanforderungen identifiziert werden; und
wobei der Optimierungsschritt einen Bündelungsschritt umfasst, in dem die den identifizierten ähnlichen Inhaltsanforderungen entsprechende Inhaltsbereitstellung in Bezug auf eine gemeinsame Zugangsoption gebündelt wird.

10. Einrichtung nach Anspruch 9, die ferner so konfiguriert ist, dass sie die Verfahrensschritte nach den Ansprüchen 2 bis 4 ausführt.

11. Einrichtung nach Anspruch 9 oder 10, die ferner konfiguriert ist zum
a) Vorhersagen einer Inhaltsanforderung für zumindest eine Inhaltsanforderungseinheit und/oder Zugangsnetzwerkeinheit; und
b) Speichern des dem Vorhersageergebnis entsprechenden Inhalts in zumindest einer Netzwerkkomponente in der Nähe der zumindest einen Inhaltsanforderungseinheit.

12. Einrichtung nach Anspruch 11, die ferner konfiguriert ist zum
c) Durchführen einer entsprechenden Übertragung des Inhalts als Multicast- und/oder Broadcast-Übertragung.

13. Einrichtung nach einem der Ansprüche 9 bis 12,
wobei die Zugangsnetzwerkeinheit eine oder mehrere der folgenden Einheiten ist: eine Telekommunikationsnetzwerk-Basisstation, ein Router, ein Switch, ein Cache, eine DVB-, DAB-, ATSC-, ISDB-, DTMB-, MBMS-, eMBMS-, feMBMS-Sendeeinheit, eine Kabel-TV-Sendeeinheit.

14. Einrichtung nach einem der Ansprüche 9 bis 13,
wobei die Zugangsoption eine oder mehrere der folgenden Optionen ist: eine Network-Slice, eine Übertragungsfrequenz, eine drahtgebundene Netzwerkverbindung, eine drahtlose Netzwerkverbindung, ein Telekommunikationsprotokoll.

## Revendications

1. Procédé d'optimisation d'utilisation dans un réseau de communication,
dans lequel le réseau de communication comprend :
a) au moins un hôte de contenu (40), configuré pour fournir au moins un contenu ;
b) une pluralité d'unités de demande de contenu (11, 12, 13, 14, 15), configurées pour envoyer une demande de contenu (110, 120, 130, 140, 150) à un hôte de contenu (40) et pour recevoir du contenu par l'intermédiaire d'au moins une option d'accès ;
c) une ou plusieurs unités de réseau d'accès (21, 22) configurées pour fournir une ou plusieurs options d'accès à une ou plusieurs des unités de demande de contenu et configurées en outre pour recevoir des demandes de contenu d'une unité de demande de contenu respective et pour délivrer du contenu à celle-ci ; et
d) un réseau de transport (30) configuré pour transporter des demandes de contenu envoyées depuis une unité de demande de contenu respective, par l'intermédiaire d'une option d'accès d'une unité de réseau d'accès respective, à un hôte de contenu respectif et pour délivrer du contenu depuis l'hôte de contenu à l'unité de réseau d'accès respective ;
dans lequel le procédé comprend
i) une étape d'analyse, réalisée dans le réseau de transport, dans laquelle une pluralité de demandes de contenu est collectée et analysée ;
ii) une étape d'optimisation, réalisée dans le réseau de transport, dans laquelle la livraison de contenu par l'intermédiaire du réseau de transport et/ou par l'intermédiaire de l'unité de réseau d'accès est optimisée sur la base du résultat d'analyse ; et
dans lequel chaque demande de contenu comprend des informations concernant le contenu demandé et des informations concernant l'unité de demande de contenu d'envoi, des informations concernant les options d'accès disponibles pour l'unité de demande de contenu d'envoi, et des informations concernant l'unité de réseau d'accès de connexion respective ;
dans lequel l'étape d'analyse comprend une étape d'identification, dans laquelle des demandes de contenu similaires sont identifiées ; et
dans lequel l'étape d'optimisation comprend une étape de groupage, dans laquelle la livraison de contenu correspondant aux demandes de contenu similaires identifiées est groupée par rapport à une option d'accès commune.

2. Procédé selon la revendication 1,
dans lequel l'étape d'identification comprend l'identification de demandes de contenu similaires dans une limite de temps prédéterminée ; et/ou
dans lequel l'étape de groupage comprend l'attente jusqu'à ce qu'un nombre prédéterminé n de demandes de contenu similaires ait été identifié ou que la limite de temps prédéterminée se soit écoulée ; et
dans lequel le contenu est délivré dans une transmission à diffusion multiple et/ou à diffusion générale par l'intermédiaire de l'option d'accès commune.

3. Procédé selon la revendication 2,
dans lequel pour chaque demande de contenu, une transmission à monodiffusion est maintenue jusqu'à ce que des demandes similaires soient identifiées, et la transmission à monodiffusion est commutée en la transmission à diffusion multiple et/ou à diffusion générale.

4. Procédé selon l'une quelconque des revendications 1 à 3,
dans lequel l'étape d'optimisation comprend la recommandation ou la commande d'un changement de l'option d'accès et/ou de l'unité de réseau d'accès à une ou plusieurs des unités de demande de contenu.

5. Procédé selon l'une quelconque des revendications 1 à 4,
dans lequel le procédé comprend en outre la prévision d'une demande de contenu pour au moins une unité de demande de contenu et/ou une unité de réseau d'accès ; et
dans lequel le procédé comprend en outre le stockage du contenu correspondant au résultat de prévision dans au moins un composant de réseau proche de l'au moins une unité de demande de contenu.

6. Procédé selon la revendication 5,
dans lequel le procédé comprend en outre la réalisation d'une transmission correspondante dudit contenu sous la forme d'une transmission à diffusion multiple et/ou à diffusion générale.

7. Procédé selon l'une quelconque des revendications 1 à 6,
dans lequel l'unité de réseau d'accès est une ou plusieurs parmi : une station de base de réseau de télécommunication, un routeur, un commutateur, une mémoire cache, une unité d'envoi DVB, DAB, ATSC, ISDB, DTMB, MBMS, eMBMS, feMBMS, une unité d'envoi de TV par câble.

8. Procédé selon l'une quelconque des revendications 1 à 7,
dans lequel l'option d'accès est une ou plusieurs parmi : une tranche de réseau, une fréquence de transmission, une connexion de réseau filaire, une connexion de réseau sans fil, un protocole de télécommunication.

9. Appareil d'optimisation de l'utilisation dans un réseau de communication,
dans lequel le réseau de communication comprend :
a) au moins un hôte de contenu (40), configuré pour fournir au moins un contenu ;
b) une pluralité d'unités de demande de contenu (11, 12, 13, 14, 15), configurées pour envoyer une demande de contenu (110, 120, 130, 140, 150) à un hôte de contenu (40) et pour recevoir du contenu par l'intermédiaire d'au moins une option d'accès ;
c) une ou plusieurs unités de réseau d'accès (21, 22) configurées pour fournir une ou plusieurs options d'accès à une ou plusieurs des unités de demande de contenu et configurées en outre pour recevoir des demandes de contenu d'une unité de demande de contenu respective et pour délivrer du contenu à celle-ci ; et
d) un réseau de transport (30) configuré pour transporter des demandes de contenu envoyées depuis une unité de demande de contenu respective, par l'intermédiaire d'une option d'accès d'une unité de réseau d'accès respective, à un hôte de contenu respectif et pour délivrer du contenu depuis l'hôte de contenu à l'unité de réseau d'accès respective ;
dans lequel l'appareil est mis en oeuvre dans le réseau de transport et est configuré pour
i) réaliser une étape d'analyse, dans laquelle une pluralité de demandes de contenu est collectée et analysée ; et
ii) réaliser une étape d'optimisation, dans laquelle la livraison de contenu par l'intermédiaire du réseau de transport et/ou par l'intermédiaire de l'unité de réseau d'accès est optimisée sur la base du résultat d'analyse ; et
dans lequel chaque demande de contenu comprend des informations concernant le contenu demandé et des informations concernant l'unité de demande de contenu d'envoi, des informations concernant les options d'accès disponibles pour l'unité de demande de contenu d'envoi, et des informations concernant l'unité de réseau d'accès de connexion respective ;
dans lequel l'étape d'analyse comprend une étape d'identification, dans laquelle des demandes de contenu similaires sont identifiées ; et
dans lequel l'étape d'optimisation comprend une étape de groupage, dans laquelle la livraison de contenu correspondant aux demandes de contenu similaires identifiées est groupée par rapport à une option d'accès commune.

10. Appareil selon la revendication 9 configuré en outre pour réaliser l'une quelconque des étapes de procédé des revendications 2 à 4.

11. Appareil selon la revendication 9 ou 10, configuré en outre pour
a) prévoir une demande de contenu pour au moins une unité de demande de contenu et/ou une unité de réseau d'accès ; et
b) stocker le contenu correspondant au résultat de la prévision dans au moins un composant de réseau proche de l'au moins une unité de demande de contenu.

12. Appareil selon la revendication 11, configuré en outre pour
c) réaliser une transmission correspondante dudit contenu sous la forme d'une transmission à diffusion multiple et/ou à diffusion générale.

13. Appareil selon l'une quelconque des revendications 9 à 12,
dans lequel l'unité de réseau d'accès est une ou plusieurs parmi : une station de base de réseau de télécommunication, un routeur, un commutateur, une mémoire cache, une unité d'envoi DVB, DAB, ATSC, ISDB, DTMB, MBMS, eMBMS, feMBMS, une unité d'envoi de TV par câble.

14. Appareil selon l'une quelconque des revendications 9 à 13,
dans lequel l'option d'accès est une ou plusieurs parmi : une tranche de réseau, une fréquence de transmission, une connexion de réseau filaire, une connexion de réseau sans fil, un protocole de télécommunication.
